# FASCICULE DE BREVET EUROPEEN

(11) **EP 1 121 806 B1**
(45) Date de publication et mention de la délivrance du brevet: **22.02.2006**
(21) Numéro de dépôt: 99949052.7
(22) Date de dépôt: 14.10.1999
(51) Int. Cl.: H04N 7/24, H04N 7/58

(54) **PROCEDE DE BASCULEMENT DE LA OU DES COMPOSANTES VIDEO D'UN PREMIER PROGRAMME AUDIOVISUEL NUMERIQUE SUR LA OU LES COMPOSANTES VIDEO D'UN SECOND PROGRAMME AUDIOVISUEL NUMERIQUE EN UTILISANT LA DUPLICATION DE TRAMES**
VIDEOKOMPONENTANBINDUNGSVERFAHREN FÜR ZWEI DIGITALE BILDTONPROGRAMME MIT DUPLIKATION VON HALBBILDERN
METHOD FOR SWITCHING FROM FIRST DIGITAL AUDIO-VISUAL PROGRAMME VIDEO COMPONENT(S) TO A SECOND DIGITAL AUDIO-VISUAL PROGRAMME VIDEO COMPONENT(S) USING FIELD DUPLICATION

(30) Priorité: 14.10.1998 FR 9812974
(43) Date de publication de la demande: 08.08.2001
(73) Titulaire: FRANCE TELECOM, 75015 Paris (FR); TELEDIFFUSION DE FRANCE, société anonyme, 75015 Paris (FR)
(72) Inventeur: CURET, Dominique, F-35235 Thorigné Fouillard (FR); VEILLARD, Michel, F-35170 Bruz (FR); LOLIVIER, Germain, F-35700 Rennes (FR); GARAULT, Thérèse, F-35136 Saint Jacques de la Lande (FR); HELLEGOUARCH, Gérard, F-35510 Cesson-Sévigné (FR); DOUTEAU, André, F-35310 Chavagne (FR); RELIER, Stéphanie, F-35700 Rennes (FR); MADEC, Gérard, F-35250 Chasne-sur-Illet (FR)
(74) Mandataire: Maillet, Alain
(86) Numéro de dépôt international: PCT/FR1999/002502
(87) Numéro de publication internationale: WO 2000/022829

(56) Documents cités:
- WO-A-98/32281
- J. MITCHELL: "MPEG video compression standard" 1996 , CHAPMANN&AL XP002098501 page 355, alinéa 3
- HURST N.; CORNOG K.: 'MPEG Splicing: A New Standard for Television - SMPTE 312M' SMPTE JOURNAL vol. 107, no. 11, Novembre 1998, USA, pages 978 - 988, XP000804761

## Description

Procédé de basculement de la ou des composantes vidéo d'un premier programme audiovisuel numérique sur la ou les composantes vidéo d'un second programme audiovisuel numérique

La présente invention concerne un procédé de basculement de la ou des composantes vidéo d'un premier programme audiovisuel numérique sur la ou les composantes vidéo d'un second programme audiovisuel numérique.

L'invention se situe dans le domaine des services audiovisuels numériques, dans lesquels des programmes numériques sont constitués d'au moins une composante vidéo, et peuvent comporter plusieurs composantes vidéo, aucune ou plusieurs composantes audio, et aucune ou plusieurs composantes de données. Dans l'invention, seul le cas des composantes vidéo est considéré.

Parmi ces services audiovisuels numériques, on peut citer ceux qui appliquent la norme dite MPEG-2 (Moving Pictures Expert Group) ISO/IEC JTCI *IS* 13818. Cette norme est décrite dans plusieurs documents correspondant chacun à une partie distincte (video, audio, system, conformance, etc.).

On comprendra cependant que la présente invention ne se limite pas à l'utilisation de cette norme particulière MPEG-2, mais concerne également des applications à tout service audiovisuel numérique. parties) de l'image P" de l'ancien programme et de références (et donc de parties) de la première image I, du nouveau programme, ce qui donne, à la restitution cet effet de «mosaïque».

Le but de la présente invention est de proposer un procédé de basculement d'une composante vidéo d'un premier programme audiovisuel numérique sur une composante vidéo d'un second programme audiovisuel numérique qui soit tel que la restitution ne présente pas un effet mosaïque au moment du basculement, et qui soit tel que la seule discontinuité présentée à l'usager soit celle qui est due au changement de programme.

A cet effet, un procédé de basculement de la ou des composantes vidéo d'un premier programme audiovisuel numérique sur la ou les composantes vidéo d'un second programme audiovisuel numérique selon l'invention est caractérisé en ce qu'il consiste à basculer sur le début du premier ensemble d'images comportant une image Intra de la composante vidéo du second programme rencontré après la commande de basculement, et dans l'ordre de transmission des images, à substituer à chacune des images bidirectionnelles de ce premier ensemble d'images se référant à des images appartenant à l'ensemble d'images qui le précédait avant basculement, une image bidirectionnelle dont le codage vidéo est réalisé indépendamment du contenu du codage de l'image substituée et des contenus des images auxquelles elle se réfère.

Selon une autre caractéristique de l'invention, lesdits vecteurs d'estimation de mouvement de la ou de chaque image de substitution sont déclarés nuls.

Un tel procédé est par exemple dans le document HURST N, VCORNOG K : "MPEG Splicing : A new Standard for Television ― SMTE 312M" SMPTE JOURNAL, vol 107, no.11, novembre 1998, (1998-11), pages 978-988 se référant à une conférence dans le cadre de la "139th SMPTE Technical Cnférence (paper no.17) in New York Nov.21-24 1997.

Le problème de l'état de la technique que cherche à résoudre la présente invention est d'éviter une impression de retour en arrière au moment du basculement.

La solution à ce problème est fait l'objet de la caractéristique de la revendication 1.

Selon une autre caractéristique de l'invention, ladite ou lesdites images de substitution se réfèrent uniquement à l'image Intra du premier ensemble d'images de la composante vidéo du second programme rencontré après la commande de basculement. La ou lesdites images de substitution sont avantageusement des images entrelacées (frame picture) analogues à des images de télévision numérique comportant ainsi une trame supérieure TOP et une trame inférieure BOTTOM et leurs prédictions sont du type prédiction par trame (field based prédiction). La trame supérieure TOP et la trame inférieure BOTTOM de la ou de chaque image de substitution font alors référence à la seule trame supérieure TOP de la première image Intra de l'ensemble d'images de la composante vidéo du second programme.

Selon une autre caractéristique de l'invention, ladite ou lesdites images de substitution se réfèrent uniquement à la dernière image prédite ou Intra précédant le basculement de la composante vidéo du second programme, ce qui peut être le cas élémentaires dits paquets PES (Packetized Elementary Stream). Les paquets PES contenant des données vidéo peuvent être de taille fixe ou de taille variable. L'exemple de réalisation décrit ci-après se situe dans le cadre de l'utilisation de paquets PES vidéo de taille variable, chaque paquet PES comportant une et une seule image (et éventuellement des en-têtes de séquence ou de groupe d'images GOP), avec un alignement des images en début de paquet PES. Les paquets PES véhiculant le même flux élémentaire sont identifiés par un même identificateur baptisé Stream Id (identificateur de flux).

La norme MPEG-2 système indique encore que les paquets PES (vidéo, audio ou données) peuvent être multiplexés, pour un usage local, avec, entre autre, des paquets PES de signalisation. Un tel multiplex peut être stocké sur des disques du type de ceux connus sous le nom disque DVD (Digital Versatile Disk) par exemple, il s'agit de la syntaxe MPEG-2 programme.

Selon la norme MPEG-2 système, le flux élémentaire mis sous la forme de paquets PES peut ensuite être découpé sous la forme de paquets de taille fixe nommés paquets transport (PT). Un tel paquet de taille fixe est identifié par un identificateur de paquet PID (Packet Identifier). Un flux de paquets PES de même identificateur de flux Stream_Id ne peut être véhiculé que dans des paquets transport ayant le même identificateur de paquet PID. Les paquets transport véhiculant un flux élémentaire particulier (et les paquets PES ayant une première fois découpé ce flux élémentaire) peuvent être multiplexés avec d'autres paquets transport PT véhiculant d'autres flux élémentaires, mais aussi avec, entre autres, des paquets transport PT contenant de la signalisation, etc. Ces multiplex de paquets transport PT sont alors utilisables pour la transmission, et leur organisation relève alors de la syntaxe MPEG-2 transport.

La norme MPEG-2 vidéo prévoit six niveaux hiérarchiques pour la syntaxe d'un flux élémentaire vidéo : la séquence, le groupe d'images dit GOP (Group Of Pictures) qui est le seul niveau optionnel, l'image (qui est de type I, P ou B), la partie d'image (slice), le macrobloc et le bloc.

Une séquence vidéo débute par un en-tête de séquence qui est suivi d'un ou plusieurs ensembles d'images. Selon MPEG-2, ces ensembles d'images peuvent être regroupés dans des groupes d'images GOP. Un groupe d'images GOP est caractérisé par un en-tête de groupe d'images GOP situé avant les images. Dans l'ordre de transmission, un groupe d'images GOP débute par une image I suivie d'un certain nombre d'images bidirectionnelles B et d'images prédites P, et ce dans un ordre précis. Un groupe d'images GOP est dit ouvert lorsque ses premières images B font référence à la dernière image P de l'ensemble d'images ou du groupe d'images GOP précédent ; il est dit fermé lorsqu'il n'y a pas une telle référence. L'invention est utile pour les flux élémentaires vidéo codés en groupe d'images GOP ouvert.

Généralement, les composantes vidéo des programmes sont constituées de suites de séquences avec un seul groupe d'images GOP par séquence. Par abus de langage, dans la suite du document, on appelle donc groupe d'images GOP, tout groupe d'images GOP qui est précédé d'un en-tête de séquence.

Chaque image comporte un en-tête et des données constituées d'un certain nombre de tranches (slice en terminologie anglo-saxonne). Une tranche regroupe plusieurs macroblocs continus dans l'image. En télévision numérique classique (format 4 ; 2 ; 0), un macrobloc est l'association de quatre blocs de luminance, d'un bloc d'une première composante de chrominance pour les mêmes pixels et d'un bloc d'une seconde composante de chrominance toujours pour les mêmes pixels. Un bloc contient par exemple les données de carrés de huit par huit pixels.

L'exemple d'application de l'invention qui est décrit ci-après se situe au niveau MPEG-2 transport, mais les opérations effectuées au niveau élémentaire et au niveau des paquets PES sont directement applicables à MPEG-2 programme.

Même si toutes les précautions sont prises pour terminer la première composante vidéo en fin de séquence (et en fin de groupe d'images GOP) et pour démarrer la seconde composante vidéo en début de séquence (et donc en début de groupe d'images GOP), un problème majeur de tout basculement d'un premier programme audiovisuel numérique de télévision classique sur un second, est celui de la dégradation de l'image qui en résulte. On sait que cette dégradation a lieu lorsque le codage des premières images B font référence à la dernière image P ou I de la séquence précédente. Si la notion de groupe d'images GOP est utilisée, ce codage est appelé "codage en groupe d'images GOP ouvert". En effet, l'apparition d'une mosaïque dans l'image restituée est occasionnée, par la rupture de la référence arrière des premières images bidirectionnelles B du nouveau groupe d'images.

On notera que chaque programme peut comporter plusieurs composantes vidéo, par exemple des composantes correspondant à des points de vue distincts du programme (plusieurs caméras par exemple). L'invention s'applique à chacune de ces composantes, mais par souci de simplification, il ne sera question dans la suite de la description que d'une composante vidéo pour chaque programme.

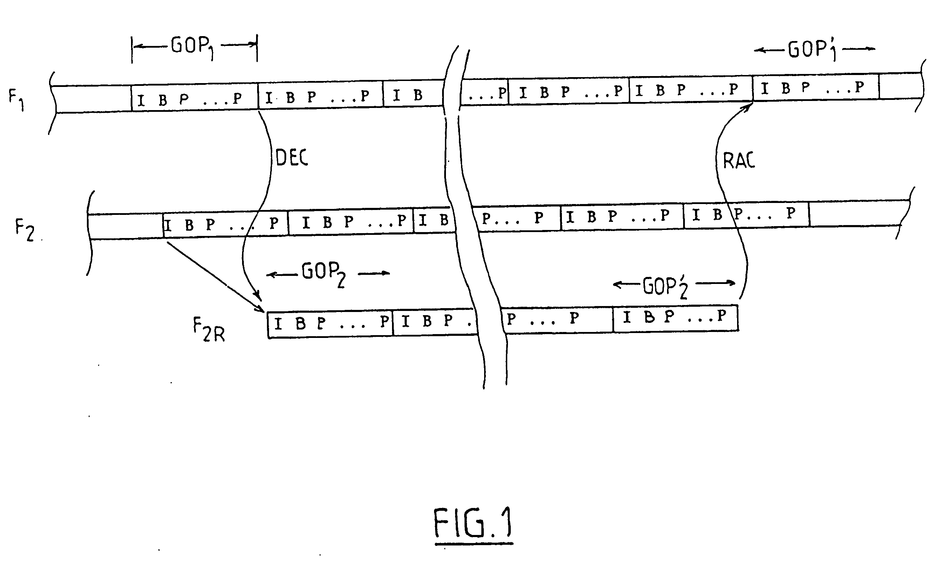

On notera que la Fig. 1 s'affranchit des niveaux paquet PES et paquet transport. Cette Fig. 1 représente un flux élémentaire vidéo F₁ d'un premier programme et un flux élémentaire vidéo F₂ d'un second programme. Chaque flux F₁, F₂ est constitué d'une suite de groupe d'images GOP comprenant des images de type I, B et P dans l'ordre de transmission. Les en-têtes de séquences ne sont pas représentés, bien que chaque groupe d'images GOP débutant par une image 1 en comporte un. Les en-têtes de groupe d'images GOP ne sont pas non plus représentés.

Le décrochage que l'on a illustré par la flèche marquée DEC intervient en fin d'un groupe d'images GOP₁ du premier programme et au commencement d'un groupe d'images GOP₂ du second programme. On notera que si le second multiplex est enregistré, aucun problème ne se pose pour démarrer sur un groupe d'images du second programme en fin d'un groupe d'images du premier programme. Par contre, comme c'est le cas sur la Fig. 1, si le second multiplex est diffusé en temps réel, le décrochage peut nécessiter de retarder le second programme afin de former un flux élémentaire vidéo retardé F_{2R}. Pour ce faire, l'utilisation d'une mémoire tampon pour le stockage d'un groupe d'images (et son empaquetage en paquets PES et éventuellement en paquets transport) du flux élémentaire vidéo du second programme peut s'avérer nécessaire. Souvent, le retard induit par cette mémoire n'est pas souhaitable. Le moyen permettant de l'éviter n'est pas abordé dans le cadre de cette invention.

De même, le raccrochage, que l'on a illustré par la flèche RAC, s'effectue en fin d'un groupe d'images GOP₂' du flux élémentaire vidéo du second programme pour recommencer sur un groupe d'images GOP₁' du flux élémentaire vidéo du premier programme. Pour ce faire, comme dans le cas du décrochage, il est possible de prévoir un retard du flux élémentaire vidéo du premier programme. Cela nécessite par conséquent une mémoire tampon pour le stockage d'un groupe d'images du flux élémentaire vidéo du premier programme ou l'utilisation du même moyen qu'au décrochage, permettant d'éviter le retard induit par cette mémoire.

Le problème majeur que pose le décrochage ou le raccrochage de programmés audiovisuels numériques en télévision classique, et de manière générale tout basculement d'un premier programme audiovisuel numérique sur un second, est celui de la dégradation de l'image qui en résulte. On sait que cette dégradation a lieu lorsque le codage des groupes d'images est un codage en groupe d'images GOP ouverts dans lesquels les premières images bidirectionnelles B font référence à la dernière image prédite P ou intra 1 du groupe d'images GOP précédent.

Par ailleurs, ce type de codage est le plus fréquemment utilisé, car dans un souci de bonne compression, les codeurs commerciaux n'exploitent généralement pas le codage en groupes d'images fermés.

La norme MPEG-2 donne la possibilité d'indiquer dans l'en-tête optionnel de groupe d'images GOP (s'il est présent) que la (ou les) premières images bidirectionnelles B du groupe d'images GOP ne peuvent pas être décodées correctement parce que l'image de référence utilisée pour la prédiction n'est plus valable. Il s'agit de l'indicateur Broken_Link (lien brisé). D'une part, cette information ne permet de corriger le problème que si la notion de groupe d'images GOP est utilisée et, d'autre part, cette indication est inutile actuellement, car généralement les applications, pas plus que la norme MPEG-2, n'obligent les récepteurs à la traiter.

L'apparition d'une mosaïque dans l'image restituée est occasionnée, par la rupture de la référence arrière des premières images bidirectionnelles B du nouveau groupe d'images (le groupe GOP₂ du second flux élémentaire vidéo au décrochage ou le groupe GOP₁' du premier flux élémentaire vidéo au raccrochage à la Fig. 1).

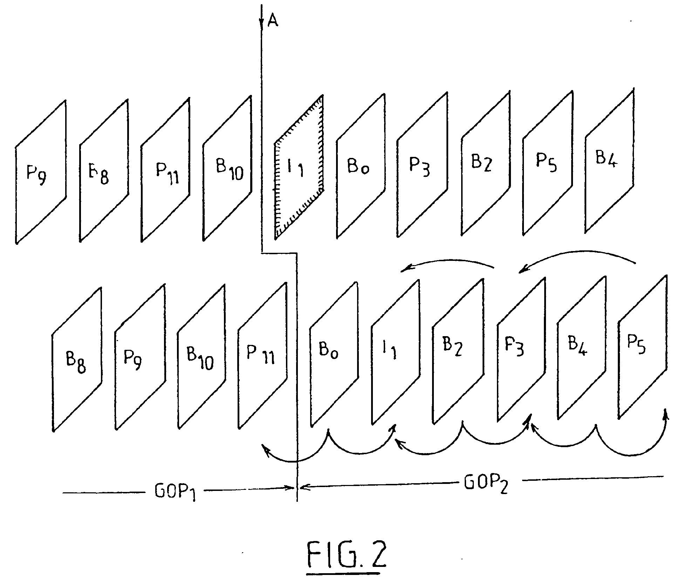

La Fig. 2 schématise la fin d'un groupe d'images GOP₁ d'un flux élémentaire vidéo d'un premier programme et le début d'un groupe d'images GOP₂ d'un flux élémentaire vidéo d'un second programme, le premier programme étant basculé sur le second. Ces groupes sont représentés dans l'ordre de transmission des images sur la ligne supérieure, et dans l'ordre d'affichage des images après décodage, sur la ligne inférieure. La flèche A représente le moment du basculement. En outre, sur cette Fig. 2, on a représenté par des arcs fléchés les références d'une image à une ou à plusieurs autres images. Par exemple, l'image B₂ fait référence à la fois à l'image I₁, et à l'image P₃ et cette image P₃ fait référence à l'image I₁. Les numéros situés en indice des images correspondent à leur ordre de présentation (ou d'affichage).

Au moment du codage, la première image bidirectionnelle Bo du groupe d'images GOP₂ a une prédiction arrière avec référence sur l'image I₁ du groupe d'images GOP₂ et une prédiction avant avec référence sur la dernière image P₁₁ du groupe d'images GOP₁ précédent. Or, après basculement, cette dernière référence s'avère être à la dernière image P₁₁ de l'ancien groupe d'images GOP₁ de la composante vidéo du premier programme, lequel ne concerne pas le même programme. La prédiction arrière de la première image B₀ ne se fait donc pas sur la bonne image P et cela entraîne un mauvais décodage de cette image B₀. Dans l'exemple donné à la Fig. 2, cette image Bo sera composée de références (et donc de parties) de l'image Pu de l'ancien programme et de références (et donc de parties) de la première image I₁ du nouveau programme, ce qui donne, à la restitution cet effet de «mosaïque».

Des solutions ont déjà été proposées pour résoudre les problèmes soulevés ci-dessus. On pourra se reporter notamment au document de brevet WO-A-98 32 281 qui décrit une méthode pour réaliser des basculements à partir de flux d'informations numériques compressés, telles que des flux transport MPEG. En particulier, les flux qui sont mis en oeuvre dans l'invention décrite dans ce document de brevet sont pourvus d'au moins un point d'entrée qui identifie un point approprié d'entrée vers le flux et d'au moins un point de sortie qui identifie un point approprié de sortie de ce flux. Ainsi, un flux principal est basculé sur son point de sortie vers le point d'entrée d'un autre flux. De plus, un point de sortie d'un flux vidéo est généralement la fin du dernier paquet transport vidéo du flux. Quant au point d'entrée, il est généralement le commencement du premier paquet transport du flux considéré. Entre un point d'entrée et un point de sortie, un flux est appelé un segment dont la première image est une image fixe et la seconde une image qui ne se réfère pas à une image antérieure au point d'entrée. Par ailleurs, la dernière image d'un segment, dans l'ordre de présentation, ne doit pas être une image B.

On comprendra qu'ainsi, par le choix approprié des points d'entrée et de sortie, un flux principal puisse être basculé vers un segment et que ce basculement se fait sans défaut apparent sur l'image présentée.

Néanmoins, comme cela est mentionné dans le document de brevet cité ci-dessus, les télévisions commerciales peuvent délibérément produire des flux qui ne comportent pas de points de sortie si bien que le basculement à partir de ces flux ne peut pas se faire sans défaut. De plus, l'utilisateur d'un tel système doit avoir la maîtrise de la source du flux vers lequel le basculement est fait de manière à remplir les contraintes évoquées ci-dessus : point d'entrée, première et seconde images, dernière image. Les utilisations mentionnées dans le document de brevet ci-dessus sont toutes mises en oeuvre dans un studio qui a donc la maîtrise du flux vers lequel le basculement est fait. Mais, dans certaines applications, par exemple en tête de station de diffusion hertzienne, cela peut ne pas être le cas car les deux sources sont de ressort des chaînes de production de télévision.

De plus, les fabricants de codeurs MPEG2 sont peu nombreux à avoir prévu des moyens pour mettre en oeuvre ces points d'entrée et de sortie.

Ainsi, le but de la présente invention est de proposer un procédé de basculement d'une composante vidéo d'un premier programme audiovisuel numérique sur une composante vidéo d'un second programme audiovisuel numérique qui soit tel que la restitution ne présente pas un effet mosaïque au moment du basculement et qui soit tel que la seule discontinuité présentée à l'usager soit celle qui est due au changement de programme.

Un autre but de la présente invention est de prévoir un tel procédé de basculement qui puisse utiliser des composantes vidéo qui ne présentent pas de points d'entrée et de points de sortie comme ceux qui sont évoqués dans le document de brevet mentionné ci-dessus.

A cet effet, un procédé de basculement de la ou des composantes vidéo d'un premier programme audiovisuel numérique sur la ou les composantes vidéo d'un second programme audiovisuel numérique selon l'invention est caractérisé en ce qu'il consiste à basculer sur le début du premier ensemble d'images comportant une image Intra de la composante vidéo du second programme rencontré après la commande de basculement, et dans l'ordre de transmission des images, à substituer à chacune des images bidirectionnelles de ce premier ensemble d'images se référant à des images appartenant à l'ensemble d'images qui le précédait avant basculement, une image bidirectionnelle dont le codage vidéo est réalisé indépendamment du contenu du codage de l'image substituée et des contenus des images auxquelles elle se réfère.

Selon une autre caractéristique de l'invention, lesdits vecteurs d'estimation de mouvement de la ou de chaque image de substitution sont déclarés nuls.

Selon une autre caractéristique de l'invention, ladite ou lesdites images de substitution se réfèrent uniquement à l'image Intra du premier ensemble d'images de la composante vidéo du second programme rencontré après la commande de basculement. La ou lesdites images de substitution sont avantageusement des images entrelacées (frame picture) analogues à des images de télévision numérique comportant ainsi une trame supérieure TOP et une trame inférieure BOTTOM et leurs prédictions sont du type prédiction par trame (field based prédiction). La trame supérieure TOP et la trame inférieure BOTTOM de la ou de chaque image de substitution font alors référence à la seule trame supérieure TOP de la première image Intra de l'ensemble d'images de la composante vidéo du second programme.

Selon une autre caractéristique de l'invention, ladite ou lesdites images de substitution se réfèrent uniquement à la dernière image prédite ou Intra précédant le basculement de la composante vidéo du second programme, ce qui peut être le cas lorsque les ensembles d'images du premier et du second sont rendus jointifs. La ou lesdites images de substitution sont là aussi avantageusement des images entrelacées (frame picture) comportant une trame- supérieure TOP et une trame inférieure BOTTOM analogues à des images de télévision numérique et leurs prédictions sont du type prédiction par trame (field based prédiction). La trame supérieure TOP et la trame inférieure BOTTOM de la ou de chaque image de substitution font alors référence à la seule trame inférieure BOTTOM de la dernière image prédite ou Intra du dernier ensemble d'images de la composante vidéo du premier programme.

Lesdites images de chacun desdits ensembles d'images du premier et du second programmes sont par exemple respectivement portés par des flux de paquets PES (Packetised Elementary Stream), chaque paquet PES comportant une et une seule image et débutant par une unité d'accès vidéo (début d'images, de séquence ou de groupe d'images). Selon l'invention, ledit procédé consiste à :
- déterminer le premier paquet PES de la composante vidéo du second programme présent après la commande de basculement dans le flux de paquets PES qui comporte un en-tête de séquence afin de déterminer le début du premier ensemble d'images du second programme sur lequel le basculement s'opère,
- à partir de ce paquet PES, se positionner sur la première image bidirectionnelle B de ce premier ensemble d'images du second programme,
- dans ce paquet PES correspondant à un début d'image B, substituer les données de la partie utile par les données de l'image de substitution,
- quand toutes les données de l'image de substitution ont été insérées, substituer les données de la partie utile de ce paquet PES par du bourrage vidéo, tel que des chiffres 0, jusqu'au dernier octet des données du paquet PES,
- puis, si le nombre d'images bidirectionnelles précédant la première image prédite dans ledit ensemble d'images est supérieur à un, répéter les deux étapes précédentes pour les images B qui suivent, soit à partir du prochain paquet PES de cette composante vidéo.

Lesdites images de chacun desdits ensembles d'images du premier et du second programmes peuvent par exemple être aussi respectivement transportées par des flux de paquets transport, chaque paquet transport possédant un indicateur PUSI qui, lorsqu'il est positionné à un, indique que ledit paquet contient le début d'un paquet PES (Packetised Elementary Stream) contenant une et une seule image et commençant par une unité d'accès vidéo et où certains paquets transport sont destinés à porter des informations de transport tel qu'un indicateur d'accès aléatoire RAI qui, lorsqu'il est positionné à un, indique que le prochain paquet transport contient les premières données d'une séquence (et d'un groupe d'images). Ledit procédé est alors caractérisé en ce qu'il consiste à :
- déterminer le premier paquet transport (PT) de la composante vidéo du second programme présent après la commande de basculement dans le flux transport qui comporte un indicateur d'accès aléatoire RAI positionné à un afin de déterminer le début du premier ensemble d'images du second programme sur lequel le basculement s'opère,
- positionner à un l'indicateur de discontinuité dans le champ d'adaptation (AF) de ce paquet transport PT,
- à partir de ce paquet transport PT avec indicateur d'accès aléatoire RAI, ce paquet inclus, se positionner sur la première image B de ce premier ensemble d'images du second programme,
- à partir de ce paquet transport PT correspondant à un début d'image bidirectionnelle B, ce paquet inclus, passer l'en-tête du paquet PES puis substituer les données de la partie utile de chaque paquet transport de la composante vidéo par les données de l'image de substitution,
- quand toutes les données de l'image de substitution ont été insérées, substituer les données de la partie utile des paquets transport PT de la composante par du bourrage vidéo, tel que des chiffres 0, jusqu'au prochain paquet transport PT de cette composante vidéo du second programme dont l'indicateur PUSI est positionné à un, ce paquet transport PT non inclus,
- puis, si le nombre d'images bidirectionnelles précédant la première image prédite est supérieur à un, répéter les deux étapes précédentes pour les images bidirectionnelles B qui suivent, soit à partir du prochain paquet transport PT dont le indicateur PUSI positionné à un.

Lesdites images de chacun desdits ensembles d'images constituant les composantes vidéo du premier et du second programmes peuvent encore être transportées par des flux de paquets transport, chaque paquet transport possédant un indicateur PUSI qui, lorsqu'il est positionné à un, indique que ledit paquet contient le début d'un paquet PES (Packetised Elementary Stream) contenant une et une seule image, mais où le second flux n'a pas d'indicateur d'accès aléatoire RAI. Ledit procédé selon l'invention est alors caractérisé en ce qu'il consiste à :
- déterminer le premier paquet transport (PT) de la composante vidéo du second programme présent après la commande de basculement dans le flux transport qui comporte un indicateur PUSI positionné à un et dont les données de la partie utile débutent par un en-tête de séquence vidéo, éventuellement suivi d'un en-tête de groupe d'images GOP,
- rechercher l'en-tête de séquence soit, s'il est présent, immédiatement après l'en-tête de paquet PES, soit, si la composante vidéo est embrouillée, par la mise en oeuvre d'un système de désembrouillage,
- si le paquet transport PT déterminé comporte un champ d'adaptation (AF), avec une référence d'horloge Program Clock Reference PCR dans le cas où la composante porte l'horloge du programme, positionner l'indice de discontinuité dans ce paquet transport PT,
- à partir de ce paquet transport PT inséré inclus, se positionner sur la première image bidirectionnelle B de ce premier ensemble d'images du second programme,
- à partir de ce paquet transport PT correspondant à un début d'image B inclus, passer l'en-tête de paquet PES ou remplacer cet en-tête de paquet PES situé en début de partie utile par un en-tête de paquet PES reconstruit puis substituer les données de la partie utile de chaque paquet transport PT de la composante vidéo par les données de l'image bidirectionnelle B de substitution, et si les paquets transport PT sont embrouillés, les indiquer en clair en positionnant le champ de contrôle de l'embrouillage transport Transport_scrambling_control (TSC) à la valeur binaire 00,
- quand toutes les données de l'image de substitution ont été insérées, substituer les données de la partie utile des paquets transport PT suivants de la composante par du bourrage vidéo, tel que des octets 00, tout en continuant de les indiquer en clair, jusqu'au prochain paquet transport PT de cette composante vidéo du second programme dont l'indicateur PUSI est positionné à un (ce paquet transport PT non inclus),
- puis, si le nombre d'images B précédant la première image P est supérieur à un, répéter les deux étapes précédentes pour les images B qui suivent, soit à partir du prochain paquet transport PT dont l'indicateur PUSI positionné à un.

Selon une autre caractéristique de l'invention, le paquet transport PT inséré présente les caractéristiques suivantes :
- l'indicateur PUSI est positionné à 0,
- la valeur du compteur de continuité est positionnée à celle du compteur de continuité du paquet transport PT précédent de la composante vidéo,
- le champ de contrôle du champ d'adaptation (AFC) est positionné à la valeur binaire 11, qui signifie qu'un champ d'adaptation (AF) et une partie utile (payload) sont présents dans ce paquet transport PT,
   l'indicateur de discontinuité situé dans l'AF est positionné à un,
- si la composante vidéo porte l'horloge du programme, positionner dans l'AF une référence d'horloge programme (PCR), calculée d'après la ou les PCR précédentes de la même composante,

Selon une variante selon laquelle un prétraitement permettant de positionner les RAI est réalisé, le paquet transport PT inséré présente les caractéristiques suivantes :
- l'indicateur PUSI est positionné à un,
- la valeur du compteur de continuité est positionnée à celle du compteur de continuité du paquet transport PT précédent de la composante vidéo,
- le champ de contrôle du champ d'adaptation (AFC) est positionné à la valeur binaire 11, qui signifie qu'un champ d'adaptation (AF) et une partie utile (payload) sont présents dans ce paquet transport PT,
- l'indicateur d'accès aléatoire (RAI) situé dans son champ d'adaptation AF est positionné à un,
- si la composante vidéo porte l'horloge du programme, positionner dans le champ d'adaptation (AF) une référence d'horloge programme (PCR), calculée d'après la PCR précédente de la même composante,
- l'en-tête de paquet PES qui se trouvait dans le paquet transport PT remplacé est déplacé dans la partie utile de ce paquet transport PT inséré, et dans le cas où l'estampille de présentation (PTS) n'est pas présente dans l'en-tête du paquet PES, cette PTS est calculée et positionnée dans les données d'en-tête de ce paquet PES.

Selon une autre caractéristique de l'invention, l'en-tête de paquet PES reconstruit est de la forme : start code = 0x000001, 0x000001, Stream_ID = celui du premier programme, longueur paquet PES = 0x0000, octet de flag = 0x8500, longueur des données d'en-tête = 0x00 : paquet PES en clair, pas de PTS/DTS, ni aucune autre donnée d'en-tête paquet PES.

Selon une autre caractéristique de l'invention, si le paquet transport PT déterminé ne comporte pas de champ d'adaptation AF ou s'il s'agit de la composante portant l'horloge du programme et que le champ d'adaptation AF ne comporte pas de référence d'horloge programme PCR, ledit procédé consiste à remplacer le paquet transport PT déterminé par un paquet de transport PT portant une référence d'horloge programme PCR, et à décaler le paquet transport PT remplacé, ainsi que les paquets transport PT suivants de cette composante vidéo dans le flux transport, jusqu'à ce que l'un d'entre eux puisse être inséré dans un paquet transport PT de bourrage.

Selon une autre caractéristique de l'invention, le procédé de basculement consiste à basculer sur le début du premier ensemble d'images du second programme rencontré après la commande de basculement, ladite commande de basculement pouvant avoir lieu sur une quelconque image de l'ensemble d'images courant du premier programme. Afin d'éviter des problèmes de régulation de la mémoire tampon du décodeur, le procédé de l'invention consiste avantageusement à substituer aux paquets transport contenant chaque image du ou des premiers ensembles d'images du second programme rencontrés après la commande de basculement un même nombre de paquets transport contenant une image correspondante surcompressée et des données de bourrage.

Ce processus peut être mis en oeuvre lors d'un décrochage d'un programme principal (par exemple un programme national) vers un programme secondaire (par exemple un programme local)

Selon une autre caractéristique de l'invention, le procédé de basculement consiste à interrompre le premier programme au début d'une image prédite suivant la commande de basculement, à insérer un motif d'images au contenu prédéterminé, puis à basculer sur le début du premier ensemble d'images du second programme rencontré après la commande de basculement. Comme précédemment, afin d'éviter des problèmes de régulation de la mémoire tampon du décodeur, le procédé de l'invention consiste avantageusement à substituer aux paquets transport contenant chaque image du ou des derniers ensembles d'images du premier programme rencontrés après la commande de basculement un même nombre de paquets transport contenant une image correspondante surcompressée et des données de bourrage.

Ce processus peut être mis en oeuvre lors d'un racccrochage d'un programme secondaire (par exemple un programme local) vers un programme principal (par exemple un programme national)

Les caractéristiques de l'invention mentionnées ci-dessus, ainsi que d'autres, apparaîtront plus clairement à la lecture de la description suivante d'un exemple de réalisation, ladite réalisation étant faite en relation avec les dessins joints, parmis lesquels :
La Fig. 1 est une vue illustrant les opérations de basculement (décrochage et raccrochage) sur des flux élémentaires vidéo,
La Fig. 2 est une vue illustrant le problème de prédiction avec référence incorrecte de la première image B du flux élémentaire vidéo du nouveau programme,
La Fig. 3 est une vue illustrant le procédé de l'invention,
La Fig. 4 est une vue illustrant un premier mode de mise en oeuvre d'un procédé selon l'invention,
La Fig. 5 est une vue illustrant un second mode de mise en oeuvre d'un procédé selon l'invention,
La Fig. 6 est une vue illustrant le basculement au niveau des paquets PES, dans sa partie supérieure, et au niveau des paquets transport, dans sa partie inférieure,
Les Fig. 7a et 7b illustrent le format des paquets transport PT insérés au décrochage et au raccrochage si besoin est,
La Fig. 8 est un schéma synoptique d'un décodeur pourvu de sa mémoire tampon,
La Fig.9 est une vue illustrant le basculement ou décrochage d'un premier programme vers un second programme avec mise en oeuvre d'un processus de surcompression, et
La Fig. 10 est une vue illustrant le basculement ou raccrochage d'un premier programme vers un second programme avec mise en oeuvre d'un processus de surcompression.

L'exemple de réalisation maintenant décrit se réfère essentiellement à la norme MPEG-2. Mais on comprendra que la présente invention ne se limite pas à cette norme.

Dans la description qui suit d'un exemple de réalisation de l'invention, la structure des groupes d'images GOP des deux flux vidéo considérés qui est caractérisée par l'écart entre deux images P (appelé paramètre M) et par l'écart entre deux images I (appelé paramètre N) est telle que le paramètre M est égal à 2, signifiant par là qu'une seule image bidirectionnelle B est placée entre deux images prédites consécutives P. Quant au paramètre N, sa valeur est quelconque, le nombre d'images dans un groupe d'images GOP est sans importance pour l'invention.

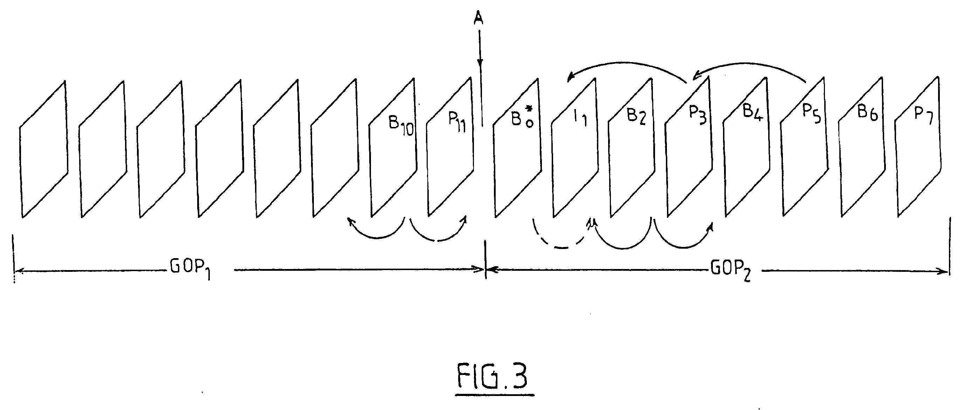

A la Fig. 3, deux groupes d'images sont représentés: le dernier groupe d'images GOP₁ de la composante vidéo d'un premier programme et le premier groupe d'images GOP₂ de la composante vidéo d'un second programme.

On notera que chaque programme peut comporter plusieurs composantes vidéo, par exemple des composantes correspondant à des points de vue distincts du programme (plusieurs caméras par exemple).

A la Fig. 3, on a représenté par une flèche A le moment de basculement du premier programme sur le second. A l'intérieur de chaque groupe d'images, une série d'images I, B et P est représentée et numérotée dans leur ordre d'affichage par un décodeur. Des arcs fléchés représentent les liens entre les différentes images.

Selon l'invention, la ou les premières images B du nouveau groupe d'images GOP₂ sont remplacées par une image B*, notée B₀* ici, dont le codage vidéo est réalisé indépendamment du contenu du codage de l'image B substituée et des contenus des images auxquelles elle se réfère.

On notera que les images considérées peuvent être des images entrelacées de télévision numérique classique. Ainsi, chaque image est constituée de deux trames, une trame supérieure, dite trame TOP et une trame inférieure, dite trame BOTTOM. La prédiction des macroblocs de ces deux trames peut être commune (frame based = basée sur la trame) ou séparée (field based = basée sur le champ). Afin d'obtenir un maintien parfait et de ne pas avoir une impression de «retour arrière», la prédiction doit être faite séparément pour chaque trame.

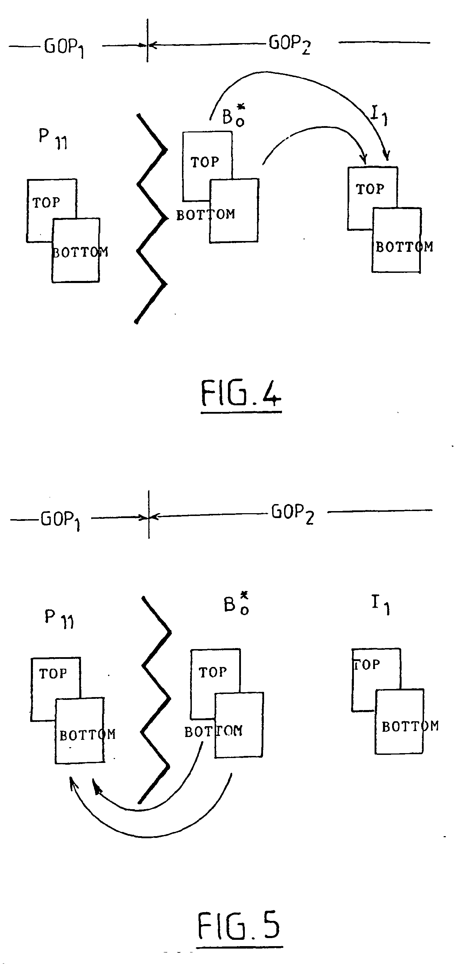

Une illustration d'un premier mode d'utilisation de l'invention est représentée à la Fig. 4. Son principe est de rompre la référence avant vers la dernière image P du GOP₁ et de figer l'image I₁ du groupe d'images GOP₂ au lieu d'afficher l'image B incorrecte. Pour ce faire, la prédiction de l'image de substitution B* est faite uniquement sur l'image I₁ (prédiction arrière), et ses vecteurs d'estimation de mouvement sont nuls.

Afin de ne pas avoir une impression de retour arrière, les deux trames de l'image de substitution B* doivent maintenir la seule trame inférieure de l'image I₁. Pour cela, la trame supérieure TOP et la trame inférieure BOTTOM de l'image de substitution B₀* font référence (prédiction arrière) à la seule trame supérieure TOP de l'image I₁ du groupe d'images GOP₂ du second programme suivant le basculement. On notera que seul le mode de prédiction par trame le permet. Ce motif de substitution permet donc un maintien de la trame supérieure de l'image I₁, du groupe d'images GOP₂ du second programme suivant le basculement. La trame supérieure TOP de l'image I₁ est ainsi présentée trois fois consécutives à la restitution : une première fois sur la trame TOP de l'image B, une seconde fois sur la trame BOTTOM de l'image B, et une troisième fois sur la trame TOP de l'image I. L'image B affichée présente une légère perte de résolution verticale en raison du décalage d'une ligne de la trame qui se répète.

Une illustration d'un second mode d'utilisation de l'invention est représentée à la Fig. 5. Son principe est de rompre la référence arrière vers l'image I₁, du groupe d'images GOP₂ et de figer la dernière image P₁₁ du groupe d'images GOP₁ au lieu d'afficher l'image Bo incorrecte. Pour ce faire, la prédiction de l'image de substitution est faite uniquement sur l'image P₁₁ (prédiction avant), et ses vecteurs d'estimation de mouvement sont nuls.

Afin de ne pas avoir une impression de retour arrière, les deux trames de l'image de substitution B* doivent maintenir la seule trame inférieure de l'image P₁₁. Pour cela, la trame supérieure TOP et la trame inférieure BOTTOM de l'image de substitution B₀* font référence (prédiction avant) à la seule trame inférieure (dite trame BOTTOM) de l'image P₁₁ du groupe d'images GOP₁ du premier programme. On notera que là aussi seul le mode de prédiction par trame le permet. Ce motif de substitution permet donc un maintien de la trame inférieure de la dernière image P du groupe d'images GOP₁ du premier programme précédant le basculement. La trame inférieure BOTTOM de la dernière image P est ainsi présentée trois fois consécutives à la restitution : une première fois sur la trame BOTTOM de l'image P affichée, puis une seconde fois sur la trame TOP de l'image B, et enfin une troisième fois sur la trame BOTTOM de l'image B. L'image B affichée présente une légère perte de résolution verticale en raison du décalage d'une ligne de la trame qui se répète.

On notera que le motif de l'image de substitution B doit avoir le même format (résolution, soit tailles horizontale et verticale en particulier) que l'image qu'il remplace. Différents moyens peuvent être mis en oeuvre pour récupérer l'information de taille. Par exemple, elle peut être extraite du descripteur dit Target_background_grid (grille de fond cible) s'il est présent dans la table de description du programme PMT (Program Map Table). Elle peut également être extraite directement des informations du flux élémentaire vidéo, etc.

Par ailleurs, la référence temporelle (ordre des images à l'affichage) de chaque image B de substitution correspond à celle de l'image qu'elle remplace dans son groupe d'images GOP.

Enfin, et pour être conforme à la norme MPEG-2, le délai minimum à attendre avant de pouvoir décoder une image, ce délai étant dénommé VbV_delay dans la norme MPEG-2, une fois que le premier octet de l'image est arrivé dans le tampon (buffer) du décodeur est défini de la manière suivante :
- s'il est positionné dans les autres images du groupe d'images GOP, il doit être également positionné dans l'image de substitution : il peut être récupéré de l'image de substitution,
- s'il est positionné à 'FFFF dans les autres images du groupe d'images GOP, il doit être également positionné à 'FFFF dans l'image de substitution.

On rappelle que selon la norme MPEG-2 transport, les paquets de flux élémentaires PES, qui contiennent chacun, dans leur charge utile, les données d'une ou plusieurs images (généralement une) sont découpés en paquets transport PT.

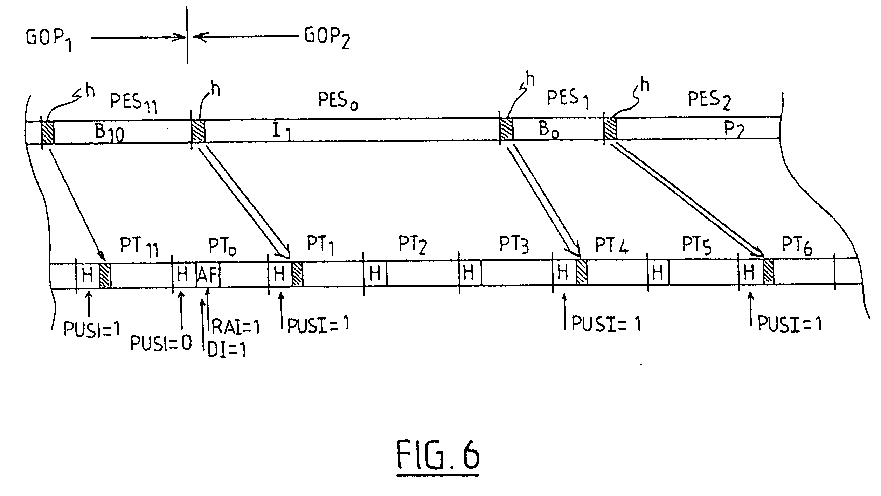

Ainsi, à la Fig. 6, on a représenté, sur la ligne supérieure, le flux des paquets de flux élémentaires PES et, sur la ligne inférieure, le flux des paquets transport correspondants. Ils sont représentés dans l'ordre de transmission. Sur cette Fig. 6, seuls les paquets véhiculant la composante vidéo d'un programme sont représentés, les paquets dont les identificateurs de flux Stream_ID (niveau des paquets PES) ou dont les identificateurs de paquet PID (niveau des paquets transport) différent pouvant s'intercaler ont été volontairement omis par souci de simplification.

Selon la norme MPEG-2, chaque paquet PES possède un en-tête h et une charge utile. Par exemple et selon ce qui est représenté à la Fig. 6, la charge utile contient les données d'une et une seule image. Les paquets PES sont donc alignés (l'indicateur d'alignement des données data_alignment_indicator est positionné à un). Par exemple, la charge utile du paquet PES₀ contient les données de l'image I₁ du nouveau groupe d'images GOP₂ et le paquet PES₁ contient les données de l'image B₀ du même groupe GOP₂.

Chaque paquet transport possède un en-tête H et une charge utile dans laquelle est présente une partie des données des images. Par définition, les contenus des paquets PT sont alignés sur les débuts des paquets PES. Généralement, la charge utile des paquets PT₁ à PT₃ portent donc l'en-tête h du paquet PES₀ suivi des données de l'image I₁, et la charge utile des paquets PT₄ et PT₅ portent l'en-tête h du paquet PES₁ suivi des données de l'image Bo du groupe d'images GOP₂.

Les paquets transport dont la charge utile commence par l'en-tête h d'un paquet PES ont l'indicateur PUSI de l'en-tête (Payload Unit Start_Indicator) positionné à un. Par définition de l'indicateur PUSI, il en est ainsi des paquets PT₁₁, PT₁, PT₄, et PT₆.

Certains paquets transport destinés à porter des informations de transport comportent un champ dit d'adaptation (Adaptation_Field). Dans ce champ d'adaptation AF, un indicateur d'accès aléatoire RAI (Random_Access-Indicator) indique, quand il est positionné à un (cas du paquet transport PT₀ dans la Fig. 6), que le prochain paquet transport avec un indicateur PUSI positionné à un (paquet transport PT₁ en l'occurrence), contient non seulement un début de paquet PES (PES₀), mais aussi un début de séquence vidéo (le groupe d'images GOP₂ en l'occurrence). On notera que le paquet transport PT avec indicateur PUSI positionné à un peut être celui dont l'indicateur RAI est à positionné à un. Le champ d'adaptation AF contient également un indicateur de discontinuité DI (Discontinuity_indicator) qui, quand il est positionné à un, indique un état de discontinuité à partir de ce paquet transport PT. Cette discontinuité concerne aussi bien le compteur de continuité que la discontinuité des références d'horloge de programme PCR si la composante transporte ces références.

Généralement, les systèmes de télévision numérique prévoient un envoi fréquent et régulier (un toutes les 500ms) des en-têtes de séquence, afin de permettre aux décodeurs vidéo de réagir rapidement en cas de changement rapide de programme ('zapping' selon le terme anglosaxon) et de mise sous tension d'un récepteur.

Selon l'invention, ces en-têtes sont utilisés pour déterminer les positions de basculement afin de démarrer le second programme de façon propre, avec des données vidéo initialisées.

Au niveau des paquets transport, ces en-têtes peuvent être balisés par des indicateurs d'accès aléatoire RAI.

Néanmoins, pour les flux transport issus de multiplexeurs qui ne positionnent pas ces indicateurs RAI, un pré-traitement permettant de les insérer est prévu, comme on le verra par la suite.

Pour déterminer la ou les images bidirectionnelles B à substituer, (une seule image dans le cas où le paramètre M est égal à 2), on recherche d'abord le paquet transport contenant le début de la séquence et de l'image I₁ de la composante vidéo du second programme sur lequel on bascule, et ce après la commande de basculement.

Pour ce faire, le paquet transport avec le champ d'adaptation AF où l'indicateur d'accès aléatoire RAI est positionné à un est recherché. A la Fig. 6, ce paquet est le paquet PT₀. Un indice de discontinuité DI est positionné dans le champ d'adaptation AF de ce paquet transport PT.

Ensuite, le prochain paquet transport PT de cette composante (celui avec l'indicateur d'accès aléatoire RAI inclus) dont l'indicateur PUSI positionné à un est recherché. Fig. 6, ce paquet est le paquet PT₁ Par définition de l'indicateur RAI, ce paquet transport PT comporte le début de séquence du second programme, suivi du début de la première image du groupe d'images GOP₂, soit l'image I₁.

Le prochain paquet transport dont l'indicateur PUSI est positionné à un (en l'occurrence paquet transport PT₄) comporte le début du paquet PES contenant l'image suivante du groupe d'images GOP, soit l'image B₀. Ce paquet PT₄ ainsi que les paquets suivants de cette composante jusqu'au prochain paquet transport PT, dont l'indicateur PUSI est positionné à un (paquet transport PT₆ dans la Fig. 6), contiennent l'en-tête de paquet PES suivi de toutes les données de l'image B₀.

Le paquet PT₆ contient les données du début de l'image suivante, en l'occurrence la première image de type P, en l'occurrence l'image P₃.

La substitution de l'image B commence donc au paquet transport PT₄ et se terminera au paquet transport PT₆ non inclus. La charge utile du premier paquet transport PT₄ contenant normalement l'en-tête de paquet PES et le début de l'image Bo, est remplacée par un en-tête paquet PES reconstitué et les premiers octets de l'image de substitution B*. La charge utile des autres paquets transport considérés est remplacée par les octets suivants de l'image de substitution B*. Quand l'image de substitution B* a été entièrement insérée dans la charge utile des paquets transport considérés, les octets de la charge utile des paquets transport suivants sont remplacés par des octets de bourrage vidéo ('00) jusqu'au prochain paquet transport de cette composante dont l'indicateur PUSI est positionné à un (paquet transport PT₆) non inclus.

L'en-tête du paquet PES₁ qui est situé au début de la charge utile du paquet transport PT₄ est remplacé par un en-tête reconstruit. A titre d'exemple, on donne ci-après les valeurs affectées à différents champs avec leurs dénominations habituelles (norme MEPG-2) : start code = 0x000001, Stream ID, longueur paquet PES = 0x0000, flag = 0x8D, longueur data header = 0x00: pas d'estampilles PTS/DTS, ni aucune autre donnée de l'en-tête paquet PES. Si le flux est en clair, l'identificateur de flux Stream_ID est conservé. Par contre, s'il est embrouillé, l'indicateur de flux Stream_ID doit être connu par ailleurs.

L'image de substitution B₀* n'est pas embrouillée, même si le flux élémentaire vidéo du second programme est embrouillé. Le paquet PES qui la véhicule n'est donc pas embrouillé (le champ nommé Scrambling_ControI dans l'en-tête des paquets PES a sa valeur binaire h qui est égale a 00 indiquant par là que les paquets PES sont en clair), de même que les paquets de transport PT qui véhiculent ce paquet PES (le champ transport Scrambling_Control TSC dans l'en-tête des paquets transport a sa valeur binaire H qui est égale à 00, indiquant par là que les paquets PES sont en clair). On notera que les messages de contrôle d'accès ECM (Entitlement Control Messages = messages de commande d'habilitation) qui contiennent les cryptogrammes des mots de contrôle continuent à être émis, mais ne sont pas utilisés puisque les paquets de transport qui véhiculent l'image de substitution sont en clair.

Dans l'exemple de la Fig.6, le paramètre M est égal à 2 : une seule image B est donc substituée. Dans le cas où le nombre d'images B consécutives au moment du basculement supérieur à un (M>2), les images B suivantes du nouveau groupe d'images GOP₂ sont également substituées par un motif d'image constant B*. Ce motif d'image est le même que pour la première image du groupe d'images GOP_{2,} mis à part la référence temporelle et éventuellement le délai Vbv_Delay. Au niveau transport, le début de l'image B suivante est situé sur le prochain paquet transport de la composante dont l'indicateur PUSI est positionné à un, paquet transport qui détermine également la fin de l'image B précédente. Le procédé de substitution est le même pour chaque image B.

Le nombre des premières images B à substituer doit être connu. Cette information n'est pas présente dans les en-têtes de groupe d'images GOP ou de séquence, ni dans aucun descripteur. Dans le cas où ce nombre ne varie pas, une solution est de trouver un moyen de transmettre cette information dans le flux, sinon seul le décodage de l'en-tête d'image permettra de connaître le type des images et d'en déduire le nombre M. Ce décodage est simple si la composante est en clair, mais nécessite un système de désembrouillage en temps réel si la composante est embrouillée. Ce décodage peut se faire durant une phase d'apprentissage qui précède le basculement si M ne varie pas ou bien au moment de l'arrivée des images du second programme. Dans ce dernier cas, une fonction de retard est nécessaire pour permettre le remplacement.

Pour l'exemple d'application de l'invention, on rappelle que les indicateurs d'accès aléatoires RAI sont utilisés pour déterminer les positions de basculement. Dans le cas où un flux transport ne comporte pas d'indicateurs RAI, on prévoit un moyen pour les insérer quelques secondes avant le basculement.

Le pré-traitement permettant de positionner les indicateurs d'accès aléatoires RAI consiste à déterminer un paquet transport PT contenant un indicateur PUSI positionné à un et un début de séquence dans sa charge utile, et à insérer juste avant ce paquet transport un nouveau paquet transport où l'indicateur RAI est positionné à un.

Selon la norme MPEG-2 système, l'indicateur RAI est situé dans le champ d'adaptation AF. Positionné à un, il indique que le prochain paquet transport PT de cette composante qui contient un début de paquet PES (et donc un indicateur PUSI positionné à 1) comporte un en-tête de séquence dans sa charge utile. Par ailleurs, toutes les informations de synchronisation doivent être présentes dans le paquet transport PT avec l'indicateur d'accès aléatoire RAI, en particulier une référence horloge PCR si la composante porte l'horloge du programme et une estampille de présentation PTS (Presentation Time Stamp) dans l'en-tête de paquet PES.

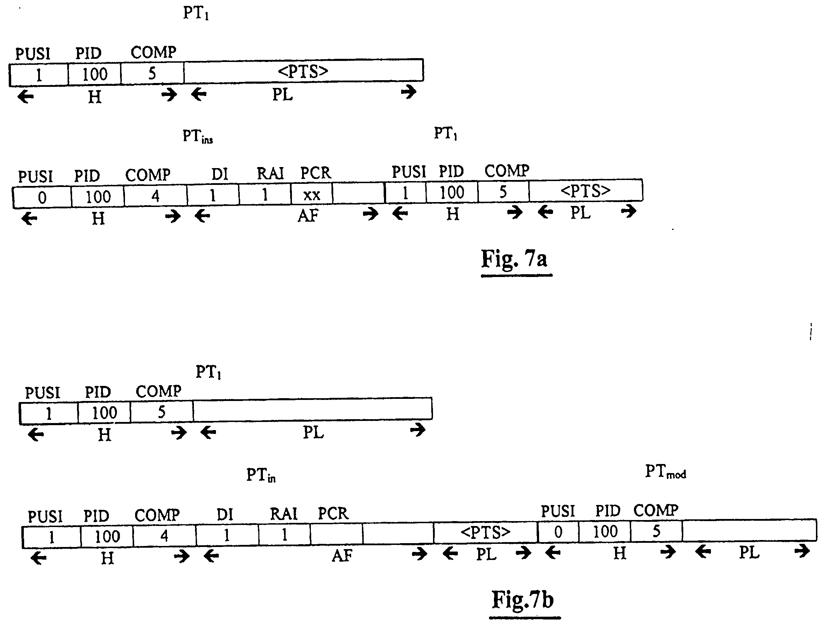

La Fig. 7a représente un exemple de mise en oeuvre du pré-traitement de positionnement de l'indicateur RAI dans le cas où l'estampille de présentation PTS est présente dans le paquet PES débutant dans le paquet transport PT₁. A la ligne supérieure est représenté un paquet transport PT₁ dont l'indicateur PUSI est positionné à un dans l'en-tête H et dont la charge utile (payload) contient le début d'un paquet PES avec une estampille de temps PTS suivie d'un en-tête de séquence. L'identificateur PID de la composante est 100 (dans cet exemple) et le compteur de continuité COMP est à la valeur arbitraire 5.

A la ligne inférieure est représenté le paquet transport PTᵢₙₛ inséré à la place du paquet transport PT₁ qui est lui-même déplacé. Ce paquet PTᵢₙₛ présente les caractéristiques suivantes :
- l'indicateur PUSI est positionné à 0 : ce paquet transport ne contient pas le début d'un paquet PES,
- la valeur du compteur de continuité COMP est positionnée à celle du compteur de continuité précédent de cette composante vidéo, soit 5 - 1 = 4,
- le champ de contrôle du champ d'adaptation (AFC) est positionné à la valeur binaire 10 indiquant que le paquet transport possède un champ d'adaptation AF mais pas de charge utile,
- l'indicateur RAI est positionné à un dans le champ d'adaptation AF,
- l'indicateur de discontinuité DI est positionné à un dans le champ d'adaptation AF,
- si la composante porte l'horloge du programme, une référence d'horloge programme PCR est positionnée dans le champ d'adaptation AF. Elle est calculée par interpolation avec les deux références d'horloge PCR précédentes de la composante considérée ou uniquement d'après la référence d'horloge PCR précédente si l'horloge système du flux transport est connue de façon précise.

Les paquets transport de la composante vidéo sont alors décalés jusqu'à ce que l'un d'entre eux puisse être placé dans un paquet transport de bourrage (le plus tôt possible).

La Fig. 7b représente un autre exemple de mise en oeuvre du pré-traitement de positionnement de l'indicateur RAI dans le cas où l'estampille de présentation PTS n'est pas présente dans le paquet PES débutant dans le paquet transport PT₁. A la ligne supérieure de la Fig. 7b, on voit le paquet transport PT₁ avec son en-tête H et sa charge utile PL.

On rappelle que la norme MPEG-2 impose qu'une estampille de présentation PTS soit présente pour le premier paquet PES (donc la première image) qui suit l'indicateur RAI.

A la ligne inférieure, est représenté le paquet PTᵢₙₛ inséré à la place du paquet transport PT₁ qui est lui-même modifié (PT_{mod}). Le paquet inséré PTᵢₙₛ présente les caractéristiques suivantes :
- l'indicateur PUSI est positionné à un : ce paquet transport contient le début d'un paquet PES,
- la valeur du compteur de continuité COMP est positionnée à celle du compteur de continuité du paquet transport précédent de cette composante vidéo, soit 5 - 1 = 4,
- le champ de contrôle AFC du champ d'adaptation AF est positionné à la valeur binaire 11 indiquant que le paquet transport possède un champ d'adaptation AF mais également une charge utile,
- dans le champ d'adaptation AF, l'indice de discontinuité DI est positionné à un,
- dans le champ d'adaptation AF, l'indicateur RAI est positionné à un,
- une référence d'horloge programme PCR est positionnée dans le champ d'adaptation AF si la composante porte l'horloge du programme, elle est calculée par interpolation avec les deux références horloge PCR précédentes de la composante considérée ou uniquement d'après la référence horloge PCR précédente si l'horloge système du flux transport est connue de façon précise.
- une charge utile comportant l'en-tête de paquet PES avec une estampille de présentation PTS calculée d'après la référence horloge PCR du paquet transport et le délai VbV_Delay de l'image (VbV= video buffer verifier). On rappelle que le délai VbV_Delay est le délai minimum à attendre avant de pouvoir décoder une image, une fois que le premier octet de l'image est arrivé dans le tampon (buffer) du décodeur.

Le paquet initial PT₁ est modifié: son indicateur PUSI est positionné à 0 et l'en-tête de paquet PES est supprimé puisque le début de paquet PES a été placé dans le paquet PTᵢₙₛ : il devient le paquet PT_{mod}. La substitution commence au paquet PT_{mod}. Les paquets transport de la composante vidéo sont décalés jusqu'à ce que l'un d'entre eux puisse être placé dans un paquet transport de bourrage (le plus tôt possible).

Dans la description qui vient d'être faite, les décrochage et raccrochage se font au groupe d'images GOP près. On a cherché des solutions pour des décrochage et raccrochage à l'image près.

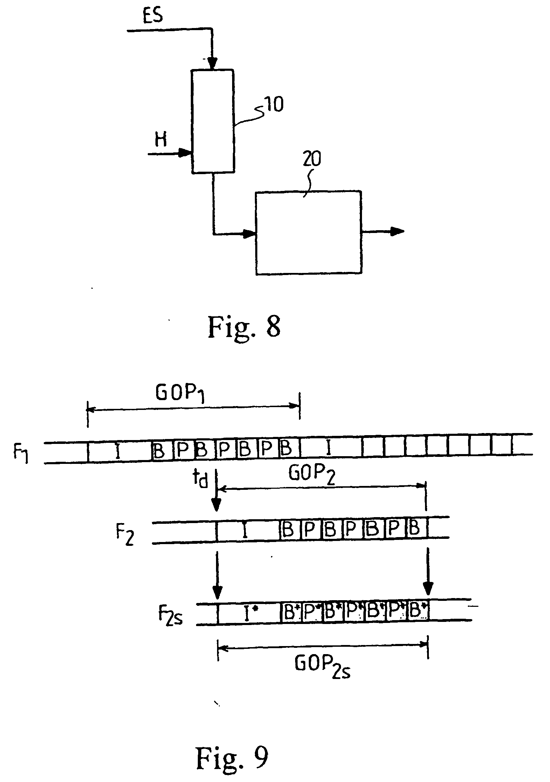

On va considérer la Fig. 8 qui montre une mémoire tampon 10 du type FIFO dont la sortie est reliée à un décodeur de flux élémentaires vidéo 20. La mémoire tampon 10 est alimentée par un flux élémentaire ES issu d'un flux de paquets élémentaires PES, lui-même issu d'un flux de paquets de transport. Au moyen d'un signal d'horloge H de période régulière, la mémoire tampon 10 délivre à chaque temps régulièrement espacé (par exemple toutes les 40 millisecondes) toutes les données concernant une image qui peut être du type I, B ou P. Le décodeur 20 décode alors ces données d'image délivrées par la mémoire tampon 10 et les délivre pour leur affichage à l'utilisateur.

La capacité de la mémoire tampon 10 est nécessairement limitée et comme on le verra par la suite, au moment d'un décrochage à l'image près d'un flux vidéo élémentaire vers un autre flux vidéo élémentaire ou au moment d'un raccrochage à l'image près d'un flux vidéo élémentaire vers un autre flux vidéo élémentaire, la bonne régulation de mémoire tampon 10 peut être perturbée. Il en résultera alors une perte de données et des perturbations dans les images affichées.

Ce problème et la solution apportée par la présente invention sont illustrés à la Fig. 9 dans le cas du décrochage d'un flux vidéo F₁ vers un flux vidéo F₂. A la Fig. 9, les flux F₁ et F₂ sont des flux de paquets transports. A cette Fig. 9, on a représenté un groupe d'images GOP₁, du flux F₁ constitué d'une image 1 suivie d'une suite d'images B et **P.** A un instant *t*_{*d*}*,* le flux F₁ est basculé sur la première image I du flux F₂ dont on a représenté un groupe d'images GOP₂, lui-même constitué d'une image I et d'une succession d'images B et P.

Pour la Fig. 9, les images B et P sont représentées comme étant de tailles nettement inférieures aux images I, ce qui est généralement le cas.

Si le flux élémentaire constitué, d'une part, de la partie du groupe d'images GOP₁ précédant le temps de basculement *t*_{*d*} et, d'autre part, des images du groupe d'images GOP₂ alimentait directement une mémoire tampon 10 telle que celle qui est représentée à la Fig. 8, il pourrait en résulter une incohérence du niveau de remplissage de cette mémoire tampon 10, due notamment, par exemple, à l'arrivée consécutive de deux images de type I dans la mémoire tampon 10.

Pour résoudre ce problème particulier, un certain nombre N (N ≥ 1) de groupes d'images du flux F₂ constituant les premiers groupes d'images après le basculement au temps *t*_{*d*} est surcompressé de manière à former un ou plusieurs groupes d'images surcompressés GOP_{2S} (à la Fig. 9, N est égal à 1).

La surcompression vidéo qui est mise en oeuvre afin d'obtenir le ou les groupes d'images surcompressés est un algorithme de réduction de débit d'une composante vidéo. En d'autres termes, le processus de surcompression mis en oeuvre consiste à extraire du flux de paquets transport et de paquets PES les groupes d'images GOP et les images du flux élémentaire ES à comprimer. Le processus de surcompression est alors mis en oeuvre sur chacune de ces images. Chaque image ainsi surcompressée est placée, après sa mise en paquet PES, dans les mêmes paquets transport que l'image initiale, les paquets ne contenant pas de données d'images étant alors remplis de données de bourrage. Avantageusement, le début de chaque image surcompressée correspond au début de l'image correspondante initiale.

Sur la Fig. 9, les images surcompressées arborent un astérisque.

Ainsi, le procédé de la présente invention consiste à substituer aux paquets transport de chaque image du ou des premiers groupes d'images GOP₂ rencontrés après la commande au temps *t*_{*c*} un même nombre de paquets transport contenant une image correspondante surcompressée et des données de bourrage.

Ce processus de réinsertion consiste à remplacer les paquets transport en utilisant le ratio de surcompression.

On notera encore que le processus de surcompression peut être mis en oeuvre préalablement à partir d'un flux vidéo F₂ enregistré et que son résultat est lui-même enregistré. Les groupes d'images surcompressés GOPs sont alors utilisés au moment voulu pour un processus de décrochage vers le flux enregistré F₂.

Cependant, il peut également être mis en oeuvre en temps réel sur un flux entrant F₂.

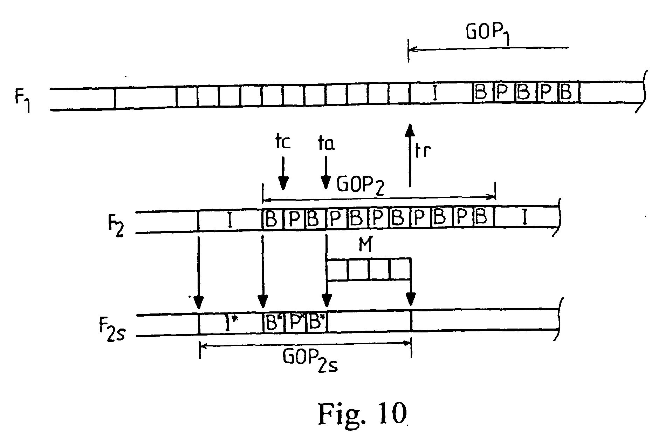

Le problème évoqué ci-dessus et la solution apportée par la présente invention sont maintenant illustrés à la Fig. 10 dans le cas du raccrochage d'un flux F₂ vers un flux F₁. A cette Fig. 10, on a représenté un groupe d'images GOP₁ d'un flux vidéo F₁, ainsi qu'un groupe d'images GOP₂ d'un flux vidéo F₂. On a représenté le groupe d'images GOP₂ comme une suite d'images I, B et P.

Au temps *t*_{*c*}, a lieu la commande de raccrochage. Au temps *t*_{*a*}, le flux F₂ est interrompu et un motif M, par exemple constitué d'une suite d'images B et P prédéfinies, est alors incrusté, et ce, jusqu'au temps *t*_{*r*} de raccrochage sur la première image 1 du groupe d'images GOP₁ du flux d'images F₁.

Au moment du raccrochage, la mémoire tampon 10 peut contenir les groupes d'images GOP₁ et GOP₂ ou partie de ceux-ci, ce qui peut entraîner une erreur de sa régulation.

Pour résoudre ce problème de régulation de la mémoire tampon 10, selon un mode de réalisation de l'invention, sont utilisés, dans le flux transport, les premières images surcompressées antérieures au temps d'interruption *t*_{*a*}*,* puis le motif M jusqu'au temps de raccrochage *t*_{*r*}*.* Le groupe constitué des images surcompressées et du motif M forme un groupe d'images surcompressé GOP_{2S} constitué des images du groupe d'images GOP₂ qui ont été surcompressées précédant le temps *t*_{*a*} d'interruption du groupe GOP_{2,} ainsi que du motif M.

A la Fig. 10, les images surcompressées arborent un astérisque.

Selon une autre variante de l'invention, ce sont plusieurs groupes d'images du flux F2 précédant le temps *t*_{*r*} de raccrochage qui sont surcompressés.

Le processus de surcompression et sa mise en oeuvre est le même que celui qui a été précédemment décrit en relation avec la Fig. 9.

On notera que les processus de surcompression qui sont décrits ci-dessus pourraient être mis en oeuvre indépendamment du processus de substitution de la présente invention, mais qu'ils en apportent néanmoins une synergie du fait qu'ils permettent des décrochage et raccrochage à l'image près.

## Revendications

1. Procédé de basculement de la ou des composantes vidéo d'un premier programme audiovisuel numérique sur la ou les composantes vidéo d'un second programme audiovisuel numérique, chaque composante vidéo étant constituée, dans l'ordre de présentation, d'une suite d'ensembles ordonnés d'images ou Intra ou prédites ou bidirectionnelles, chaque image Intra ne se référant à aucune autre image, chaque image prédite se référant à l'image Intra ou à l'image prédite la précédant, chaque image bidirectionnelle pouvant se référer à deux images Intra ou prédites, soit à l'image Intra ou à l'image prédite la précédant soit à l'image Intra ou à l'image prédite la suivant, soit à une combinaison des deux images Intra ou prédites précédentes et suivantes, ledit basculement ayant lieu sur le début du premier ensemble d'images comportant une image Intra de la composante vidéo du second programme rencontré après la commande de basculement, et dans l'ordre de transmission des images, ledit procédé incluant une étape de substitution à chacune des images bidirectionnelles de ce premier ensemble d'images se référant à des images appartenant à l'ensemble d'images qui le précédait avant basculement, une image de substitution constituée d'une image bidirectionnelle se référant à l'image précédente dans l'ordre de transmission et ayant son vecteur d'estimation de mouvement positionné à zéro, **caractérisé en ce que** chaque image de substitution est une image entrelacée comportant une trame supérieure TOP et une trame inférieure BOTTOM et **en ce que** la trame supérieure TOP et la trame inférieure BOTTOM se réfèrent toutes les deux à la trame la plus proche dans l'ordre d'affichage de la dernière image de la composante vidéo du premier programme.

2. Procédé de basculement selon la revendication 1, **caractérisé en ce que** ladite ou lesdites images de substitution se réfèrent uniquement à l'image Intra du premier ensemble d'images de la composante vidéo du second programme rencontré après la commande de basculement, ladite trame supérieure TOP et ladite trame inférieure BOTTOM de chaque image de substitution se référant à la seule trame supérieure TOP de ladite première image Intra dudit ensemble d'images de la composante vidéo du second programme.

3. Procédé de basculement selon une des revendications précédentes, **caractérisé en ce que** la ou lesdites images de substitution font référence à une image de référence qui est soit la dernière image prédite or la dernière image-Intra du dernier groupe d'images de la composante vidéo dudit premier programme, et **en ce que** la trame supérieure TOP et la trame inférieure BOTTOM de la ou de chaque image de substitution font référence à la seule trame inférieure BOTTOM de ladite image de référence.

4. Procédé de basculement selon une des revendications précédentes, lesdites images de chacun desdits ensembles d'images du premier et du second programmes étant respectivement portés par des flux de paquets PES (Packetised Elementary Stream), chaque paquet PES comportant une et une seule image et débutant par une unité d'accès vidéo, **caractérisé en ce qu'**il consiste à :
- déterminer le premier paquet PES de la composante vidéo du second programme présent après la commande de basculement dans le flux de paquets PES qui comporte une en-tête de séquence afin de déterminer le début du premier ensemble d'images du second programme sur lequel le basculement s'opère,
- à partir de ce paquet PES, se positionner sur la première image bidirectionnelle B de ce premier ensemble d'images du second programme,
- dans ce paquet PES correspondant à un début d'image B, substituer les données de la partie utile par les données de l'image de substitution,
- quand toutes les données de l'image de substitution ont été insérées, substituer les données de la partie utile de ce paquet PES par du bourrage vidéo, tel que des chiffres 0, jusqu'au dernier octet des données du paquet PES,
- puis, si le nombre d'images bidirectionnelles précédant la première image prédite dans ledit ensemble d'images est supérieur à un, répéter les deux étapes précédentes pour les images B qui suivent, soit à partir du prochain paquet PES de cette composante vidéo.

5. Procédé de basculement selon une des revendications 1 à 3, lesdites images de chacun desdits ensembles d'images du premier et du second programmes sont respectivement transportées par des flux de paquets transport, chaque paquet transport possédant un indicateur PUSI qui, lorsqu'il est positionné à un, indique que ledit paquet contient le début d'un paquet PES (Packetised Elementary Stream) contenant une et une seule image et commençant par une unité d'accès vidéo et où certains paquets transport sont destinés à porter des informations de transport tel qu'un indicateur d'accès aléatoire RAI qui, lorsqu'il est positionné à un, indique que le prochain paquet transport contient les premières données d'une séquence (et d'un groupe d'images), **caractérisé en ce qu'**il consiste à :
- déterminer le premier paquet transport (PT) de la composante vidéo du second programme présent après la commande de basculement dans le flux transport qui comporte un indicateur d'accès aléatoire RAI positionné à un afin de déterminer le début du premier ensemble d'images du second programme sur lequel le basculement s'opère,
- positionner à un l'indicateur de discontinuité dans le champ d'adaptation (AF) de ce paquet transport PT,
- à partir de ce paquet transport PT avec indicateur d'accès aléatoire RAI, ce paquet inclus, se positionner sur la première image B de ce premier ensemble d'images du second programme,
- à partir de ce paquet transport PT correspondant à un début d'image bidirectionnelle B, ce paquet inclus, passer l'en-tête du paquet PES puis substituer les données de la partie utile de chaque paquet transport de la composante vidéo par les données de l'image de substitution,
- quand toutes les données de l'image de substitution ont été insérées, substituer les données de la partie utile des paquets transport PT de la composante par du bourrage vidéo, tel que des chiffres 0, jusqu'au prochain paquet transport PT de cette composante vidéo du second programme dont l'indicateur PUSI est positionné à un, ce paquet transport PT non inclus,
- puis, si le nombre d'images bidirectionnelles précédant la première image prédite est supérieur à un, répéter les deux étapes précédentes pour les images bidirectionnelles B qui suivent, soit à partir du prochain paquet transport PT dont le indicateur PUSI positionné à un.

6. Procédé de basculement selon une des revendications 1 à 3, lesdites images de chacun desdits ensembles d'images constituant les composantes vidéo du premier et du second programmes sont transportées par des flux de paquets transport, chaque paquet transport possédant un indicateur PUSI qui, lorsqu'il est positionné à un, indique que ledit paquet contient le début d'un paquet PES (Packetised Elementary Stream) contenant une et une seule image, mais où le second flux n'a pas d'indicateur d'accès aléatoire RAI, **caractérisé en ce qu'**il consiste à :
- déterminer le premier paquet transport (PT) de la composante vidéo du second programme présent après la commande de basculement dans le flux transport qui comporte un indicateur PUSI positionné à un et dont les données de la partie utile débutent par un en-tête de séquence vidéo, éventuellement suivi d'un en-tête de groupe d'images GOP,
- rechercher l'en-tête de séquence soit, s'il est présent, immédiatement après l'en-tête de paquet PES, soit, si la composante vidéo est embrouillée, par la mise en oeuvre d'un système de désembrouillage,
- si le paquet transport PT déterminé comporte un champ d'adaptation (AF), avec une référence d'horloge Program Clock Reference PCR dans le cas où la composante porte l'horloge du programme, positionner l'indice de discontinuité dans ce paquet transport PT,
- à partir de ce paquet transport PT inséré inclus, se positionner sur la première image bidirectionnelle B de ce premier ensemble d'images du second programme,
- à partir de ce paquet transport PT correspondant à un début d'image B inclus, passer l'en-tête de paquet PES ou remplacer cet en-tête de paquet PES situé en début de partie utile par un en-tête de paquet PES reconstruit puis substituer les données de la partie utile de chaque paquet transport PT de la composante vidéo par les données de l'image bidirectionnelle B de substitution, et si les paquets transport PT sont embrouillés, les indiquer en clair en positionnant le champ de contrôle de l'embrouillage transport Transport_scrambling_control (TSC) à la valeur binaire 00,
- quand toutes les données de l'image de substitution ont été insérées, substituer les données de la partie utile des paquets transport PT suivants de la composante par du bourrage vidéo, tel que des octets 00, tout en continuant de les indiquer en clair, jusqu'au prochain paquet transport PT de cette composante vidéo du second programme dont l'indicateur PUSI est positionné à un (ce paquet transport PT non inclus),
- puis, si le nombre d'images B précédant la première image P est supérieur à un, répéter les deux étapes précédentes pour les images B qui suivent, soit à partir du prochain paquet transport PT dont l'indicateur PUSI positionné à un.

7. Procédé de basculement selon la revendication 6, **caractérisé en ce que** le paquet transport PT inséré présente les caractéristiques suivantes :
- l'indicateur PUSI est positionné à 0,
- la valeur du compteur de continuité est positionnée à celle du compteur de continuité du paquet transport PT précédent de la composante vidéo,
- le champ de contrôle du champ d'adaptation (AFC) est positionné à la valeur binaire 11, qui signifie qu'un champ d'adaptation (AF) et une partie utile (payload) sont présents dans ce paquet transport PT,
l'indicateur de discontinuité situé dans l'AF est positionné à un,
- si la composante vidéo porte l'horloge du programme, positionner dans l'AF une référence d'horloge programme (PCR), calculée d'après la ou les PCR précédentes de la même composante,

8. Procédé de basculement selon la revendication 7, et selon lequel un prétraitement permettant de positionner les RAI est réalisé, **caractérisé en ce que** le paquet transport PT inséré présente les caractéristiques suivantes :
- l'indicateur PUSI est positionné à un,
- la valeur du compteur de continuité est positionnée à celle du compteur de continuité du paquet transport PT précédent de la composante vidéo,
- le champ de contrôle du champ d'adaptation (AFC) est positionné à la valeur binaire 11, qui signifie qu'un champ d'adaptation (AF) et une partie utile (payload) sont présents dans ce paquet transport PT,
- l'indicateur d'accès aléatoire (RAI) situé dans son champ d'adaptation AF est positionné à un,
- si la composante vidéo porte l'horloge du programme, positionner dans le champ d'adaptation (AF) une référence d'horloge programme (PCR), calculée d'après la PCR précédente de la même composante,
- l'en-tête de paquet PES qui se trouvait dans le paquet transport PT remplacé est déplacé dans la partie utile de ce paquet transport PT inséré, et dans le cas où l'estampille de présentation (PTS) n'est pas présente dans l'en-tête du paquet PES, cette PTS est calculée et positionnée dans les données d'en-tête de ce paquet PES.

9. Procédé de basculement selon une des revendications 6 à 8, **caractérisé en ce que** l'en-tête de paquet PES reconstruit est de la forme : start code = 0x000001, 0x000001, Stream_ID = celui du premier programme, longueur paquet PES = 0x0000, octet de flag = 0x8500, longueur des données d'en-tête = 0x00 : paquet PES en clair, pas de PTS/DTS, ni aucune autre donnée d'en-tête paquet PES,

10. Procédé de basculement selon la revendication 7 à 9, **caractérisé en ce que** si le paquet transport PT déterminé ne comporte pas de champ d'adaptation AF ou s'il s'agit de la composante portant l'horloge du programme et que le champ d'adaptation AF ne comporte pas de référence d'horloge programme PCR, remplacer le paquet transport PT déterminé par un paquet de transport PT portant une référence d'horloge programme PCR, et décaler le paquet transport PT remplacé, ainsi que les paquets transport PT suivants de cette composante vidéo dans le flux transport, jusqu'à ce que l'un d'entre eux puisse être inséré dans un paquet transport PT de bourrage.

11. Procédé de basculement selon une des revendications précédentes, **caractérisé en ce qu'**il consiste à basculer sur le début du premier ensemble d'images du second programme rencontré après la commande de basculement, ladite commande de basculement pouvant avoir lieu sur une quelconque image de l'ensemble d'images courant du premier programme.

12. Procédé de basculement selon la revendication 11, **caractérisé en ce qu'**il consiste à substituer aux paquets transport contenant chaque image du ou des premiers ensembles d'images du second programme rencontrés après la commande de basculement un même nombre de paquets transport contenant une image correspondante surcompressée et des données de bourrage.

13. Procédé de basculement selon une des revendications 1 à 12, **caractérisé en ce qu'**il consiste à interrompre le premier programme au début d'une image prédite suivant la commande de basculement, à insérer un motif d'images au contenu prédéterminé, puis à basculer sur le début du premier ensemble d'images du second programme rencontré après la commande de basculement, **caractérisé en ce qu'**il consiste à substituer aux paquets transport contenant chaque image du ou des derniers ensembles d'images du premier programme précédant le basculement un même nombre de paquets transport contenant une image correspondante surcompressée et des données de bourrage.

## Claims

1. Switching procedure of the video component or components of a first digital audio-visual programme on the video component or components of a second digital audio-visual programme, each video component consisting, in the order of presentation, of a set of ordered groups of pictures, either Intra, predicted or bidirectional, each Intra picture not referring to any other picture, each predicted picture referring to the Intra picture or the predicted picture preceding it, each bidirectional picture being able refering to two Intra or the predicted pictures, either to the Intra picture or the predicted picture preceding it, or the Intra picture or predicted picture following it, or a combination of the two previous and subsequent Intra or predicted pictures, said switching taking place at the start of the first group of pictures including an Intra picture of the video component of the second programme found after the switching command, and in the order of picture transmission, said procedure including a replacement step at each of the bidirectional pictures of this first group of pictures referring to pictures belonging to the group of pictures which preceded it before switching, a replacement picture consisting of a bidirectional picture referring to the previous picture in the order of transmission and having its movement estimation vector set to zero, **characterised by** the fact that each replacement picture is an inter-linked picture including an upper TOP frame and a lower BOTTOM frame and in that the upper TOP frame and the lower BOTTOM frame both refer to the nearest frame in the order of displaying of the last picture of the video component of the first programme.

2. Switching procedure according to claim 1, **characterised by** the fact that said replacement picture or pictures refer only to the Intra picture of the first group of pictures of the video component of the second programme found after the switching command, said upper TOP frame and said lower BOTTOM frame of each replacement picture referring to only one upper TOP frame of said first Intra picture of said group of pictures of the video component of the second programme.

3. Switching procedure according to one of the previous claims, **characterised by** the fact that the replacement picture or pictures refer to an picture of reference which is either the last predicted picture or the last Intra picture of the last group of pictures of the video component of said first programme, and in that the upper TOP frame and the lower BOTTOM frame of the replacement picture or each picture refer only to the lower BOTTOM frame of said picture of reference.

4. Switching procedure according to one of the previous claims, said pictures of each of said groups of pictures of the first and second programmes being respectively carried by the flows of PES (Packetised Elementary Stream) packets, each PES packet including one and one only picture and starting with a video access unit, **characterised by** the fact that it consists of:
- determining the first PES packet of the video component of the second programme present after the switching command in the flow of PES packets which includes one sequence header, in order to determine the start of the first group of pictures of the second programme on which the switching operates;
- from this PES packet, set the position on the first bidirectional picture B of this first group of pictures of the second programme;
- in this PES packet corresponding to a start of a B picture, replace the data of the useful part by the data of the replacement picture;
- when all the data of the replacement picture have been inserted, replace the data of the useful part of this PES packet with video padding, such as zero figures, up to the last byte of the data of the PES packet;
- then, if the number of bidirectional pictures preceding the first predicted picture in said group of pictures is in excess of one, repeat the two previous steps for the following B pictures, that is from the next PES packet of this video component.

5. Switching procedure according to one of the claims 1 to 3, said pictures of each of said groups of pictures of the first and second programmes are respectively transported by flows of transport packets, each transport packet possessing a PUSI indicator which, when it is positioned at one, indicates that said packet contains the start of a PES (Packetised Elementary Stream) packet, containing one picture and one picture only, and starting from a video access unit and where certain transport packets are intended to carry transport information such as a random RAI access indicator which, when it is positioned at one, indicates that the next transport packet contains the first data of a sequence (and of a group of pictures) **characterised by** the fact that it consists of:
- determining the first transport packet (PT) of the video component of the second programme present after the switching command in the transport flow which includes a random RAI access indicator positioned at one in order to determine the start of the first group of pictures of the second programme on which the switching operates;
- position at one the indicator of discontinuity in the adaptation field (AF) of this PT transport packet;
- from this PT transport packet with a random RAI access indicator, including this packet, set the position on the first B picture of this first group of pictures of the second programme;
- from this PT transport packet corresponding to a start of B bidirectional picture, including this packet, go to the header of the PES packet then replace the data of the useful part of each transport packet of the video component with the data of the replacement picture;
- when all the data of the replacement picture have been inserted, replace the data of the useful part of the PT transport packets of the component with video padding, such as zero figures, until the next PT transport packet of this video component of the second programme, the PUSI indicator of which is positioned at one, not including this PT transport packet;
- then, if the number of bidirectional pictures preceding the first predicted picture is in excess of one, repeat the two previous steps for the following bidirectional B pictures, that is from the next PT transport packet, the PUSI indicator of which is positioned at one.

6. Switching procedure according to one of the claims 1 to 3, said pictures of each of said groups of pictures constituting the video components of the first and second programmes are transported by flows of transport packets, each transport packet possessing a PUSI indicator which, when it is positioned at one, indicates that said packet contains the start of a PES (Packetised Elementary Stream) packet containing one picture and one picture only, but where the second flow does not have a random RAI access indicator, **characterised by** the fact that it consists of:
- determining the first transport packet (PT) of the video component of the second programme present after the switching command in the transport flow which includes a PUSI indicator positioned at one and the data of the useful part of which start from a video sequence header, possibly followed by a header of a group of pictures GOP;
- find out the sequence header either, if it is present, immediately after the PES packet header or, if the video component is scrambled, by commissioning an unscrambling system;
- if the determined PT transport packet includes an adaptation field (AF), with a Programme Clock Reference PCR if the component carries the programme clock, position the discontinuity index in this PT transport packet;
- from this inserted and inverted PT transport packet, set the position on the first bidirectional picture B of this first group of pictures of the second programme;
- from this PT transport packet corresponding to a start of B picture, pass the PES packet header, or replace this PES packet header situated at the start of the useful part with a re-constructed PES packet header, then replace the data of the useful part of each PT transport packet of the video component with the replacement bidirectional B picture data, and if the PT transport packets are scrambled, clearly indicate them by positioning the control field of the transport scrambling Transport_scrambling_control (TSC) at the binary value 00;
- when all the data of the replacement picture have been inserted, replace the data of the useful part of the following PT transport packets of the component with video padding, such as 00 bytes, while continuing to clearly indicate them until the next PT transport packet of this video component of the second programme, the PUSI indicator of which is positioned at one (not including this PT transport packet);
- then, if the number of B pictures preceding the first picture P is in excess of one, repeat the two previous steps for the following B pictures, that is from the next PT transport packet the PUSI indicator of which is positioned at one.

7. Switching procedure according to claim 6, **characterised by** the fact that the PT transport packet inserted presents the following characteristics:
- the PUSI indicator is positioned at 0;
- the value of the continuity counter is positioned at the value of the continuity counter of the previous PT transport packet of the video component;
- the control field of the adaptation field (AFC) is positioned at the binary value 11, which means that an adaptation field (AF) and a useful part (payload) are present in this PT transport packet;
- the discontinuity indicator situated in the AF is positioned at one;
- if the video component carries the programme clock, position a programme clock reference (PCR) in the AF, calculated according to the previous PCR or PCR's of the same component;

8. Switching procedure according to claim 7, and according to which a pretreatment which makes it possible to position the RAI is carried out, **characterised by** the fact that the inserted PT transport packet presents the following characteristics:
- the PUSI indicator is positioned at one;
- the value of the continuity counter is positioned at the value of the continuity counter of the previous PT transport packet of the video component;
- the control field of the adaptation field (AFC) is positioned at the binary value 11, which means that an adaptation field (AF) and a useful part (payload) are present in this PT transport packet;
- the random access indicator (RAI) situated in its adaptation field AF is positioned at one;
- if the video component carries the programme clock, position in the adaptation field (AF) a programme clock reference (PCR) calculated according to the previous PCR of the same component;
- the PES packet header which is found in the replaced PT transport packet is moved to the useful part of this inserted PT transport packet, and if the presentation stamp (PTS) is not present in the PES packet header, this PTS is calculated and positioned in the header data of this PES packet.

9. Switching procedure according to one of the claims 6 to 8, **characterised by** the fact that the re-constructed PES packet header is of the following form: start code = 0×000001, Ox000001, Stream_ID = that of the first programme, packet length PES = 0x0000, flag byte = 0x8500, length of header data = 0x00; PES packet clear, no PTS/DTS, nor any other PES packet header data.

10. Switching procedure according to claims 7 to 9, **characterised by** the fact that if the determined PT transport packet does not include any adaptation field AF or if it concerns the component carrying the programme clock and the adaptation field AF does not include any programme clock reference PCR, replace the determined PT transport packet with a PT transport packet bearing a programme clock reference PCR, and move forward the replaced PT transport packet, as well as the following PT transport packets of this video component in the transport flow, until one of them can be inserted in a PT transport packet of padding.

11. Switching procedure according to one of the previous claims, **characterised by** the fact that it consists of switching on the start of the first group of pictures of the second programme found after the switching command, said switching command being able to take place on any picture whatever of the current group of pictures of the first programme.

12. Switching procedure according to claim 11, **characterised by** the fact that it consists of replacing the transport packets containing each picture of the first group or groups of pictures of the second programme found after the switching command, with the same number of transport packets containing a corresponding over-compressed picture and padding data.

13. Switching procedure according to one of the claims 1 to 12, **characterised by** the fact that it consists of interrupting the first programme at the start of a predicted picture according to the switching command, to insert a motif of pictures with previously determined content, then switch on the start of the first group of pictures of the second programme found after the switching command, **characterised by** the fact that it consists of replacing the transport packets containing each picture of the last group or groups of pictures of the first programme prior to the switching of the same number of transport packets containing a corresponding over-compressed picture and padding data.

## Patentansprüche

1. Verfahren zum Umschalten der Videokomponente(n) eines ersten digitalen Bildtonprogramms auf die Videokomponente(n) eines zweiten digitalen Bildtonprogramms, wobei jede Videokomponente in der Reihenfolge der Präsentation aus einer Reihe geordneter Einheiten von Bildern oder Intra-Bilder oder Prädiktionsbilder oder bidirektionalen Bildern besteht, wobei sich jedes Intra-Bild auf kein anderes Bild bezieht, wobei sich jedes Prädiktionsbild auf das Intra-Bild oder auf das Prädiktionsbild, das ihm vorausgeht, bezieht, wobei sich jedes bidirektionale Bild auf zwei Intra- oder Prädiktionsbilder beziehen kann, entweder auf das Intra-Bild oder auf das Prädiktionsbild, das ihm vorausgeht, das heißt, auf das Intra-Bild oder das Prädiktionsbild, das auf es folgt, oder auf eine Kombination der zwei vorausgehenden oder folgenden Intra-Bilder oder Prädiktionsbilder, wobei das Umschalten auf dem Anfang der ersten Einheit von Bildern stattfindet, die ein Intra-Bild der Videokomponente des zweiten Programms enthalten, das nach dem Umschaltbefehl angetroffen wird, und in der Reihenfolge der Übertragung der Bilder, wobei das Verfahren einen Schritt des Ersetzens für jedes der bidirektionalen Bilder dieser ersten Einheit von Bildern, die sich auf Bilder beziehen, die der Einheit von Bildern angehören, die ihr vor dem Umschalten vorausgeht, durch ein Substitutionsbild, das aus einem bidirektionalen Bild besteht, das sich auf das vorausgehende Bild in der Reihenfolge der Übertragung bezieht und das seinen Bewegungsschätzungsvektor auf Null positioniert hat, umfasst, **dadurch gekennzeichnet, dass** jedes Substitutionsbild ein verschachteltes Bild ist, das einen oberen Rahmen TOP und einen unteren Rahmen BOTTOM enthält, und dass sich der obere Rahmen TOP und der untere Rahmen BOTTOM beide auf den Rahmen beziehen, der in der Anzeigefolge des letzten Bilds der Videokomponente des ersten Programms am nächsten ist.

2. Umschaltverfahren nach Anspruch 1, **dadurch gekennzeichnet, dass** sich das oder die Substitutionsbilder nur auf das Intra-Bild der ersten Einheit von Bildern der Videokomponente des zweiten nach dem Befehl des Umschaltens angetroffenen Programms beziehen, wobei sich der obere Rahmen TOP und der untere Rahmen BOTTOM jedes Substitutionsbilds nur auf den oberen Rahmen TOP des ersten Intra-Bilds der Einheit von Bildern der Videokomponente des zweiten Programms beziehen.

3. Umschaltverfahren nach einem der vorausgehenden Ansprüche, **dadurch gekennzeichnet, dass** sich das oder die Substitutionsbilder auf ein Referenzbild beziehen, das entweder das letzte Prädiktionsbild oder das letzte Intra-Bild der letzten Gruppe von Bildern der Videokomponente des ersten Programms ist, und dass sich der obere Rahmen TOP und der untere Rahmen BOTTOM des oder jedes Substitutionsbilds nur auf den unteren Rahmen BOTTOM des Referenzbilds beziehen.

4. Umschaltverfahren nach einem der vorausgehenden Ansprüche, wobei die Bilder jeder der Einheiten von Bildern des ersten und des zweiten Programms jeweils von Paketströmen PES (Packetised Elementary Stream) getragen werden, wobei jedes Paket PES ein einziges Bild enthält und mit einer Videozugangseinheit beginnt, **dadurch gekennzeichnet, dass** es darin besteht:
- das erste Paket PES der Videokomponente des zweiten Programms zu bestimmen, das nach dem Unschaltbefehl in dem Strom von Paketen PES gegenwärtig ist, das einen Sequenzkopfteil enthält, um den Anfang der ersten Einheit von Bildern des zweiten Programms, auf dem das Umschalten eintritt, zu bestimmen,
- sich ausgehend von diesem Paket PES auf das erste bidirektionale Bild B dieser ersten Einheit von Bildern des zweiten Programms zu positionieren,
- in diesem Paket PES, das einem Anfang des Bilds B entspricht, die Daten des Nutzteils durch Daten des Substitutionsbilds zu ersetzen,
- nach dem Einfügen aller Daten des Substitutionsbilds die Daten des Nutzteils dieses Pakets PES durch Videostopfen, wie zum Beispiel die Ziffern 0, bis zum letzten Byte der Daten des Pakets PES, zu ersetzen,
- und dann, wenn die Anzahl bidirektionaler Bilder, die dem ersten Prädiktionsbild in der Einheit von Bildern vorausgeht, größer ist als Eins, die zwei vorausgehenden Schritte für die Bilder B, die darauf folgen, zu wiederholen, das heißt ab dem nächsten Paket PES dieser Videokomponente.

5. Umschaltverfahren nach einem der Ansprüche 1 bis 3, wobei die Bilder jeder der Einheiten von Bildern des ersten und des zweiten Programms jeweils von Transportpaketströmen transportiert werden, wobei jedes Transportpaket einen Indikator PUSI besitzt, der, wenn er auf Eins positioniert ist, anzeigt, dass das Paket den Anfang eines Pakets PES (Packetised Elementary Stream) enthält, das ein einziges Bild enthält und mit einer Videozugangseinheit beginnt, und wobei bestimmte Transportpakete dazu bestimmt sind, Transportinformationen zu tragen, wie zum Beispiel einen Zufallszugriffindikator RAI, der, wenn er auf Eins gestellt ist, anzeigt, dass das nächste Transportpaket die ersten Daten einer Sequenz (und einer Gruppe von Bildern) enthält, **dadurch gekennzeichnet, dass** es besteht in:
- dem Bestimmen des ersten Transportpakets (PT) der Videokomponente des zweiten Programms, das nach dem Umschaltbefehl in dem Transportstrom gegenwärtig ist, der einen Zufallszugriffindikator RAI umfasst, der auf Eins gesetzt ist, um den Anfang der ersten Einheit von Bildern des zweiten Programms zu bestimmen, auf dem das Umschalten erfolgt,
- Positionieren dieses Transportpakets PT auf einen Indikator der Diskontinuität in dem Anpassungsfeld (AF),
- ausgehend von diesem Transportpaket PT mit dem Zufallszugriffindikator RAI, dieses Paket inbegriffen, sich auf das erste Bild B dieser ersten Einheit von Bildern des zweiten Programms zu positionieren,
- ausgehend von diesem Transportpaket PT, das einem Anfang eines bidirektionalen Bilds B entspricht, dieses Paket inbegriffen, Durchgeben des Kopfteils des Pakets PES und dann Ersetzen der Daten des Nutzteils jedes Transportpakets der Videokomponente durch Daten des Substitutionsbilds,
- wenn alle Daten des Substitutionsbilds eingefügt wurden, Ersetzen der Daten des Nutzteils des Transportpakets PT der Komponente durch Videostopfen, zum Beispiel der Ziffern 0, bis zum nächsten Transportpaket PT dieser Videokomponente des zweiten Programms, dessen Indikator PUSI auf Eins gesetzt ist, dieses Transportpaket PT nicht inbegriffen,
- dann, wenn die Anzahl der bidirektionalen Bilder, die dem ersten Prädiktionsbild vorausgehen, größer ist als Eins, Wiederholen der zwei vorausgehenden Schritte für die darauf folgenden bidirektionalen Bilder B, das heißt ab dem nächsten Transportpaket PT, dessen Indikator PUSI auf Eins gesetzt ist.

6. Umschaltverfahren nach einem der Ansprüche 1 bis 3, wobei die Bilder jeder der Einheiten von Bildern, die die Videokomponenten des ersten und des zweiten Programms bilden, von Transportpaketströmen transportiert werden, wobei jedes Transportpaket einen Indikator PUSI besitzt, der, wenn er auf Eins gesetzt ist, anzeigt, dass das Paket den Anfang eines Pakets PES (Packetised Elementary Stream) enthält, das ein einziges Bild enthält, bei dem der zweite Strom jedoch keinen Zufallszugriffindikator RAI hat, **dadurch gekennzeichnet, dass** es aus Folgendem besteht:
- Bestimmen des ersten Transportpakets (PT) der Videokomponente des zweiten Programms, das nach dem Umschaltbefehl in dem Transportstrom gegenwärtig ist, der einen Indikator PUSI umfasst, der auf Eins gesetzt ist und dessen Daten des Nutzteils mit einem Videosequenzkopfteil beginnen, eventuell gefolgt von einem Bildgruppenkopfteil GOP,
- Suchen des Sequenzkopfteils entweder, wenn er gegenwärtig ist, sofort nach dem Kopfteil des Pakets PES oder, wenn die Videokomponente gestört ist, durch Anwenden eines Entstörungssystems,
- wenn das bestimmte Transportpaket PT ein Anpassungsfeld (AF) mit einer Taktgeberreferenz Programm Clock Reference PCR enthält, in dem Fall, in dem die Komponente den Programmtaktgeber trägt, Setzen des Diskontinuitätsindex in diesem Transportpaket PT,
- ausgehend von diesem eingefügten und inbegriffenen Transportpaket PT, sich auf das erste bidirektionale Bild B dieser ersten Einheit von Bildern des zweiten Programms positionieren,
- ausgehend von diesem Transportpaket PT, das einem Anfang eines inbegriffenen Bilds B entspricht, Durchgeben des Kopfteils des Pakets PES oder Ersetzen dieses Kopfteils des Pakets PES, der sich am Anfang des Nutzteils befindet, durch einen rekonstruierten Kopfteil des Pakets PES, und dann Ersetzen der Daten des Nutzteils jedes Transportpakets PT der Videokomponente durch die Daten des bidirektionalen Substitutionsbilds B, und, wenn die Transportpakete PT gestört sind, sie in klar angeben, indem das Kontrollfeld der Transportstörung Transport_scrambling_control (TSC) auf den binären Wert 00 gesetzt wird,
- wenn alle Daten des Substitutionsbilds eingefügt wurden, Ersetzen der Daten des Nutzteils der darauf folgenden Transportpakete PT der Komponente durch Videostopfen, wie zum Beispiel Bytes 00, und sie gleichzeitig in klar weiter angeben, bis zum nächsten Transportpaket PT dieser Videokomponente des zweiten Programms, dessen Indikator PUSI auf Eins gesetzt ist (dieses Transportpaket PT nicht inbegriffen),
- dann, wenn die Anzahl von Bildern B, die dem ersten Bild P vorausgehen, größer ist als Eins, Wiederholen der zwei vorausgehenden Schritte für die darauf folgenden Bilder B, das heißt ausgehend von dem nächsten Transportpaket PT, dessen Indikator PUSI auf Eins gesetzt ist.

7. Umschaltverfahren nach Anspruch 6, **dadurch gekennzeichnet, dass** das eingefügte Transportpaket PT die folgenden Merkmale aufweist:
- der Indikator PUSI ist auf 0 gesetzt,
- der Wert des Kontinuitätszählers ist auf den des Kontinuitätszählers des Transportpakets PT, das der Videokomponente vorausgeht, gesetzt,
- das Kontrollfeld des Anpassungsfelds (AFC) ist auf den binären Wert 11 gesetzt, was anzeigt, dass in diesem Transportpaket PT ein Anpassungsfeld (AF) und ein Nutzteil (payload) gegenwärtig sind, der Diskontinuitätsindikator in dem AF ist auf Eins gesetzt,
- wenn die Videokomponente den Programmtaktgeber trägt, in AF eine Programmtaktgeberreferenz (PCR) positionieren, die gemäß der oder den vorausgehenden PCR der gleichen Komponente berechnet ist.

8. Umschaltverfahren nach Anspruch 7 und gemäß welchem eine Vorbehandlung durchgeführt wird, die es erlaubt, die RAI zu positionieren, **dadurch gekennzeichnet, dass** das eingefügte Transportpaket PT die folgenden Merkmale aufweist:
- der Indikator PUSI ist auf Eins gesetzt,
- der Wert des Kontinuitätszählers ist auf den des Kontinuitätszählers des vorausgehenden Transportpakets PT der Videokomponente gesetzt,
- das Kontrollfeld des Anpassungsfelds (AFC) ist auf den binären Wert 11 gesetzt, was bedeutet, dass ein Anpassungsfeld (AF) und ein Nutzteil (payload) in diesem Transportpaket PT gegenwärtig sind,
- der Zufallszugriffindikator (RAI), der sich in seinem Anpassungsfeld AF befindet, ist auf Eins gesetzt,
- wenn die Videokomponente den Programmtaktgeber trägt, in dem Anpassungsfeld (AF) eine Programmtaktgeberreferenz (PCR) positionieren, die gemäß der vorausgehenden PCR der gleichen Komponente berechnet wird,
- der Kopfteil des Pakets PES, der sich in dem ersetzten Transportpaket PT befand, wird in den Nutzteil dieses eingefügten Transportpakets PT versetzt und, wenn der Präsentationsstempel (PTS) in dem Kopfteil des Pakets PES nicht gegenwärtig ist, wird dieser PTS berechnet und in die Kopfteildaten dieses Pakets PES positioniert.

9. Umschaltverfahren nach einem der Ansprüche 6 bis 8, **dadurch gekennzeichnet, dass** der Kopfteil des rekonstruierten Pakets PES die folgende Form hat: start code = 0x000001, 0×000001, Stream_ID = der des ersten Programms, Länge des Pakets PES = 0x0000, Flagbyte = 0x8500, Länge der Kopfteildaten = 0x00: Paket PES in klar, kein PTS/DTS und keine andere Kopfteilinformation des Pakets PES.

10. Umschaltverfahren nach Anspruch 7 bis 9, **dadurch gekennzeichnet, dass**, wenn das bestimmte Transportpaket PT kein Anpassungsfeld AF umfasst, oder wenn es sich um die Komponente handelt, die den Programmtaktgeber trägt, und das Anpassungsfeld AF keine Programmtaktgeberreferenz PCR enthält, das bestimmte Transportpaket PT durch ein Transportpaket PT ersetzt wird, das eine Programmtaktgeberreferenz PCR trägt und das ersetzte Transportpaket PT sowie die darauf folgenden Transportpakete PT dieser Videokomponente in dem Transportstrom versetzt werden, bis eines von ihnen in ein Stopftransportpaket PT eingefügt werden kann.

11. Umschaltverfahren nach einem der vorausgehenden Ansprüche, **dadurch gekennzeichnet, dass** es darin besteht, auf dem Anfang der ersten Einheit von Bildern des zweiten Programms, das nach dem Umschaltbefehl angetroffen wird umzuschalten, wobei der Umschaltbefehl auf einem beliebigen Bild der laufenden Einheit von Bildern des ersten Programms stattfinden kann.

12. Umschaltverfahren nach Anspruch 11, **dadurch gekennzeichnet, dass** es darin besteht, die Transportpakete, die jedes Bild des oder der ersten Einheit(en) von Bildern des zweiten Programms, die nach dem Umschaltbefehl angetroffen werden, durch eine gleiche Anzahl von Transportpaketen zu ersetzen, die ein entsprechendes überkomprimiertes Bild und Stopfdaten enthält.

13. Umschaltverfahren nach einem der Ansprüche 1 bis 12, **dadurch gekennzeichnet, dass** es darin besteht, das erste Programm zu Beginn eines Prädiktionsbilds, das auf den Umschaltbefehl folgt, zu unterbrechen, ein Muster von Bildern mit vorausbestimmtem Inhalt einzufügen und dann auf dem Anfang der ersten Einheit von Bildern des zweiten Programms, das nach dem Umschaltbefehl angetroffen wird, umzuschalten, **dadurch gekennzeichnet, dass** es darin besteht, die Transportpakete, die jedes Bild des oder der letzten Einheiten von Bildern des ersten Programms, die dem Umschalten vorausgehen, enthalten, durch eine gleiche Anzahl von Bildern zu ersetzen, die ein entsprechendes überkomprimiertes Bild und Stopfdaten enthalten.
